# EUROPÄISCHE PATENTSCHRIFT

(11) **EP 4 258 639 B1**
(45) Veröffentlichungstag und Bekanntmachung des Hinweises auf die Patenterteilung: **07.05.2025**
(21) Anmeldenummer: 23164002.0
(22) Anmeldetag: 24.03.2023
(51) Int. Cl.: H04N 5/222, G06F 3/14, G09F 9/302, G09F 9/33, H04N 5/262, H04N 23/90

(54) **HINTERGRUND-WIEDERGABEEINRICHTUNG**
BACKGROUND REPRODUCING DEVICE
DISPOSITIF DE REPRODUCTION D'ARRIÈRE-PLAN

(30) Priorität: 08.04.2022 DE 102022108569
(43) Veröffentlichungstag der Anmeldung: 11.10.2023
(73) Patentinhaber: Arnold & Richter Cine Technik GmbH & Co. Betriebs KG, 80807 München (DE)
(72) Erfinder: POPP, Hermann, 81547 München (DE)
(74) Vertreter: Manitz Finsterwald Patent- und Rechtsanwaltspartnerschaft mbB

(56) Entgegenhaltungen:
- WO-A1-2021/216645
- WO-A2-2020/027645
- US-A1- 2020 145 644
- US-A1- 2022 051 604
- US-A1- 2022 093 034
- WANG YEN-CHIN ET AL: "Comparative Evaluation of the Imaging Performance of Multi-Primary Color LCDs With RGBCW and RGBCY Pixel Units by Simulation", JOURNAL OF DISPLAY TECHNOLOGY, IEEE SERVICE CENTER, NEW YORK, NY, US, vol. 10, no. 9, 1 September 2014 (2014-09-01), pages 729 - 736, XP011552915, ISSN: 1551-319X, [retrieved on 20140702], DOI: 10.1109/JDT.2014.2312923
- SHMUEL ROTH ET AL: "4.5: Multi-primary LCD for TV Applications", SID 2007, 2007 SID INTERNATIONAL SYMPOSIUM, SOCIETY FOR INFORMATION DISPLAY, LOS ANGELES, USA, vol. XXXVIII, 20 May 2007 (2007-05-20), pages 34 - 37, XP007013267, ISSN: 0007-966X

## Beschreibung

Die Erfindung betrifft eine Hintergrund-Wiedergabeeinrichtung für ein virtuelles Bildaufnahmestudio, welche dazu ausgebildet ist, für eine Aufnahme mittels einer zugeordneten Kamera hinter oder über einem realen Motiv eine Darstellung eines virtuellen Hintergrunds wiederzugeben.

Derartige Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine Umgebung geschaffen werden, in welcher sich ein Schauspieler während einer Bewegtbildaufnahme bewegen oder welche einen Hintergrund für eine Stillbildaufnahme bilden kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von Lichtquellen und/oder aktiven Bildpunktelementen umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über dem realen Motiv in dem virtuellen Bildaufnahmestudio angeordnet werden, um auch das unmittelbare Aufnehmen einer Darstellung eines virtuellen Himmels oder einer virtuellen Decke eines Raums in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Eine derartig einzusetzende Hintergrund-Wiedergabeeinrichtung ist beispielsweise in US 2020/145644 A1 beschrieben. WO 2021/216645, der Artikel "Comparative Evaluation of the Imaging Performance of Multi-Primary Color LCDs With RGBCW and RGBCY Pixel Units by Simulation" aus dem Journal of Display Technology, Bd. 10, Nr. 9 vom 1. September 2014 und der Artikel "4.5 Multi-primary LCD for TV Applications" aus den Proceedings zu dem 2007 SID International Symposium der Society For Information Display, Bd. XXXVIII vom 20. Mai 2007 beschreiben den Einsatz von Multi-Primary Displays bei Fernsehern, bei welchen zusätzlich zu RBG Lichtquellen andersfarbige Lichtquellen eingesetzt werden.

Insbesondere kann es eine derartige Hintergrund-Wiedergabeeinrichtung ermöglichen, durch entsprechendes Ansteuern der Bildpunktelemente einen virtuellen Hintergrund bildlich dazustellen und/oder durch Verändern der Ansteuerung während einer Aufnahme anzupassen. Der im vorliegenden Zusammenhang genannte virtuelle Hintergrund kann insbesondere ein Hintergrundmotiv repräsentieren, dessen Darstellung von einer zugeordneten Kamera als scheinbar reale Umgebung einer (Vordergrund-)Szene unmittelbar aufgenommen werden kann. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Um verschiedene Darstellungen eines virtuellen Hintergrunds an einer solchen Hintergrund-Wiedergabeeinrichtung wiedergeben zu können, ist man in der Regel bestrebt, die Hintergrund-Wiedergabeeinrichtung zum Wiedergeben eines möglichst großen Farbraums auszubilden. Dazu können an den Bildpunktelementen beispielsweise verschiedene Lichtquellen, die Licht in einem jeweiligen Wellenlängenbereich emittieren, miteinander gemischt werden, um eine Farbe eines jeweiligen Bildpunktelements festzulegen. Beispielsweise kann es das Mischen roter, grüner und blauer Lichtquellen ermöglichen, einen großen RGB-(Rot-Grün-Blau)-Farbraum an der Hintergrund-Wiedergabeeinrichtung wiederzugeben, so dass ein jeweiliger Bildpunkt der Darstellung des virtuellen Hintergrunds insbesondere durch Mischen jeweiliger roter, grüner und blauer Lichtquellen eines Bildpunktelements an der Hintergrund-Wiedergabeeinrichtung wiedergegeben werden kann.

Um den an der Hintergrund-Wiedergabeeinrichtung wiedergebbaren Farbraum zu maximieren, kann es zudem vorgesehen sein, spektral schmalbandige Lichtquellen an der Hintergrund-Wiedergabeeinrichtung einzusetzen, die insbesondere im sichtbaren Spektrum weit außen liegende Farben emittieren können. Dadurch können auch diese weit außen liegenden Farben prinzipiell für eine Wiedergabe an der Hintergrund-Wiedergabeeinrichtung erreichbar sein und durch entsprechendes Mischen der einzelnen Lichtquellen können grundsätzlich sämtliche Farben zwischen den außen liegenden Farben wiedergebbar sein.

Im Zusammenhang mit solchen, zu einem Wiedergeben eines großen Farbraums ausgebildeten Hintergrund-Wiedergabeeinrichtungen ergibt sich jedoch die Problematik, dass sich das von der Hintergrund-Wiedergabeeinrichtung emittierte Lichtspektrum von einem Spektrum natürlichem Licht unterscheiden und beispielsweise diskontinuierlich verlaufen kann. Jedoch wird das von der Hintergrund-Wiedergabeeinrichtung emittierte Licht von vor oder unter der Darstellung des virtuellen Hintergrunds von der Kamera aufgenommenen realen Motiven, insbesondere von Schauspielern, reflektiert, wobei diese realen Motive wellenlängenabhängige Reflexionseigenschaften aufweisen können. Aufgrund des sich von natürlichem Licht spektral unterscheidenden Lichts der Hintergrund-Wiedergabeeinrichtung kann daher das von dem realen Motiv reflektierte Licht beispielsweise in einer anderen Farbe erscheinen als bei einer Reflexion natürlichen Lichts und entsprechend von der Kamera abgebildet werden. Insofern kann bei derartigen Hintergrund-Wiedergabeeinrichtungen mit einem großen Farbraum zumeist nur eine unzureichende Farbwiedergabequalität erreicht werden, die aufwendige Nachbearbeitungen des aufgenommenem Kameramaterials insbesondere im Bereich der abgebildeten realen Motive zur Folge haben kann. Insbesondere in Situationen, in denen das reale Motiv zusätzlich beispielsweise von Scheinwerfern in dem virtuellen Bildaufnahmestudio beleuchtet wird, die wiederum ein anderes Emissionsspektrum und beispielsweise ein für eine gute Farbwiedergabe optimiertes Emissionsspektrum aufweisen können, ist eine solche Korrektur jedoch meist kaum möglich.

Es ist daher eine Aufgabe der Erfindung, eine Hintergrund-Wiedergabeeinrichtung zu schaffen, welche eine Wiedergabe einer Darstellung eines virtuellen Hintergrunds in einem großen Farbraum ermöglicht und eine gegenüber herkömmlichen Hintergrund-Wiedergabeeinrichtungen verbesserte Farbwiedergabequalität aufweist.

Diese Aufgabe wird gelöst durch eine Hintergrund-Wiedergabeeinrichtung mit den Merkmalen des Anspruchs 1.

Die Hintergrund-Wiedergabeeinrichtung weist zumindest ein Paneel mit einer Vielzahl von Bildpunktelementen in einer zumindest zweidimensionalen Anordnung auf, wobei jedes der Vielzahl von Bildpunktelementen eine jeweilige Lichtquelleneinheit aufweist, welche eine erste Lichtquelle zum Erzeugen eines ersten Emissionsspektrums, eine zweite Lichtquelle zum Erzeugen eines zweiten Emissionsspektrums und eine dritte Lichtquelle zum Erzeugen eines dritten Emissionsspektrums umfasst. Ferner weist die Hintergrund-Wiedergabeeinrichtung eine Steuereinrichtung auf, welche dazu ausgebildet ist, die Lichtquellen der Lichtquelleneinheiten individuell anzusteuern und durch Mischen der jeweiligen ersten Emissionsspektren, zweiten Emissionsspektren und dritten Emissionsspektren ein jeweiliges Lichtquelleneinheit-Emissionsspektrum zu generieren. Darüber hinaus weist das zumindest eine Paneel eine Vielzahl von Korrekturlichtquellen auf und die Steuereinrichtung ist dazu ausgebildet, das jeweilige Lichtquelleneinheit-Emissionsspektrum durch Ansteuern der Korrekturlichtquellen zu einem korrigierten Emissionsspektrum anzupassen, welches einem vorgegebenen oder vorgebbaren Emissionsspektrum angenähert ist.

Insbesondere kann die Darstellung des virtuellen Hintergrunds durch eine Vielzahl von Bildinformationen zusammengesetzt sein, wobei jede Bildinformation insbesondere einen Farbwert und eine Helligkeit umfassen kann, die an einem jeweiligen Bildpunktelement wiedergegeben wird. Indem jedes Bildpunktelement eine Lichtquelleneinheit umfasst, welche drei Lichtquellen zum Erzeugen jeweiliger Emissionsspektren aufweist, kann mittels der Steuereinrichtung durch entsprechende Einstellung der Intensitäten und/oder Helligkeiten der einzelnen Lichtquellen eine dem Bildpunktelement zugeordnete Bildinformation an dem Bildpunktelement eingestellt werden, so dass die Bildinformation an und von dem Bildpunktelement an der Hintergrund-Wiedergabeeinrichtung bzw. an dem zumindest einen Paneel wiedergegeben werden kann. Insbesondere können sich dazu das erste Emissionsspektrum, das zweite Emissionsspektrum und das dritte Emissionsspektrum voneinander unterscheiden, so dass ein bestimmter Farbwert durch entsprechend anteiliges Mischen der Emissionsspektren einstellbar sein kann. Beispielsweise können die Lichtquellen der Lichtquelleneinheiten dazu ausgebildet sein, ein jeweiliges schmalbandige Emissionsspektrum zu emittieren, wobei ferner zwei Lichtquellen der drei Lichtquellen einer Lichtquelleneinheit insbesondere dazu ausgebildet sein können, Licht mit im sichtbaren Spektrum weit außen liegenden Farben zu emittieren, um einen möglichst großen Farbraum mittels der Hintergrund-Wiedergabeeinrichtung wiedergegeben zu können.

Indem jedes der Bildpunktelemente eine solche jeweilige Lichtquelleneinheit aufweist, kann insbesondere ein großer Farbraum in einer vornehmlich durch die Anordnung der Bildpunktelemente vorgegebenen Auflösung an der Hintergrund-Wiedergabeeinrichtung wiedergebbar sein. Grundsätzlich kann an jedem Bildpunktelement durch entsprechendes Mischen der Emissionsspektren der drei Lichtquellen eine beliebige Farbe einstellbar sein, wobei der einstellbare Farbraum insbesondere durch die spektral am weitesten außen liegenden Emissionsspektren des ersten Emissionsspektrums, des zweiten Emissionsspektrums und des dritten Emissionsspektrums festgelegt sein kann.

Während die Lichtquelleneinheiten somit eine exakte Einstellung der wiedergegebenen Farbe des Bildpunktelements ermöglichen, kann sich das bei einer bestimmten Farbe generierte Lichtquelleneinheit-Emissionsspektrum jedoch aufgrund der Durchmischung lediglich dreier Emissionsspektren und insbesondere dreier schmalbandiger Emissionsspektren von einem Emissionsspektrum natürlichen Lichts unterscheiden und beispielsweise diskontinuierlich verlaufen. Um jedoch auch eine möglichst hohe Farbwiedergabequalität mittels der Hintergrund-Wiedergabeeinrichtung erreichen zu können, ist an dem Paneel zudem eine Vielzahl von Korrekturlichtquellen angeordnet, welche mittels der Steuereinrichtung ebenfalls ansteuerbar sind.

Diese Korrekturlichtquellen ermöglichen es, infolge einer Ansteuerung durch die Steuereinrichtung und insbesondere durch ein Mischen von Emissionsspektren der Korrekturlichtquellen, die auch als Korrekturlichtemissionsspektren bezeichnet werden können, mit den Lichtquelleneinheit-Emissionsspektren, die Lichtquelleneinheit-Emissionsspektren derart anzupassen, dass das letztlich von einer Lichtquelleneinheit emittierte korrigierte Emissionsspektrum dem vorgegebenen oder vorgebbaren Emissionsspektrum angenähert ist. Insbesondere kann durch das zusätzliche Emittieren von Licht durch die Korrekturlichtquellen das korrigierte Emissionsspektrum gegenüber dem Lichtquelleneinheit-Emissionsspektrum verstetigt und dadurch einem Emissionsspektrum natürlichen Lichts angenähert werden, indem die Emissionsspektren der Korrekturlichtquellen gewissermaßen in einem Lichtquelleneinheit-Emissionsspektrum zwischen den jeweiligen Emissionsspektren der einzelnen Lichtquellen liegende Lücken überbrücken können. Dazu können die Korrekturlichtquellen insbesondere dazu ausgebildet sein, Licht mit einem Emissionsspektrum zu emittieren, welches sich von dem ersten Emissionsspektrum, dem zweiten Emissionsspektrum und dem dritten Emissionsspektrum unterscheidet.

Insbesondere kann es eine derartige Korrektur des Lichtquelleneinheit-Emissionsspektrums ermöglichen, vor oder unter der Darstellung des virtuellen Hintergrunds bzw. der Hintergrund-Wiedergabeeinrichtung angeordnete reale Motive von der zugeordneten Kamera in einer natürlichem Licht ähnelnden Umgebung mittels der zugeordneten Kamera abbilden zu können, wozu als das vorgegebene oder vorgebbare Emissionsspektrum ein Emissionsspektrum natürlichen Lichts vorgesehen sein kann. Der in der Abbildung entstehende Eindruck einer in dem virtuellen Bildaufnahmestudio aufgenommenen Szene kann dadurch dem Eindruck einer Aufnahme in einem dem virtuellen Hintergrund entsprechenden realen Hintergrund, beispielsweise einer Landschaft in natürlichem Licht, noch weiter angenähert werden. Zudem kann ein solches korrigiertes Emissionsspektrum einem Beleuchtungs-Emissionsspektrum etwaiger weiterer Beleuchtungseinrichtungen in dem virtuellen Bildaufnahmestudio, beispielsweise eines Scheinwerfers, angenähert werden, die für eine möglichst hohe Wiedergabequalität ausgelegt sein können, so dass das Beleuchtungs-Emissionsspektrum der Beleuchtungseinrichtung das vorgegebene oder vorgebbare Emissionsspektrum bilden kann. Etwaige Übergänge in einer von der Kamera erzeugten Abbildung des realen Motivs aufgrund der spektralen Reflexionseigenschaften des realen Motivs, die in einem Übergang von einer Beleuchtung durch einen Scheinwerfer zu einer Beleuchtung durch die Hintergrund-Wiedergabeeinrichtung zu einem unterschiedlichen Farbeindruck in der Abbildung führen können, können somit vermieden werden. Dementsprechend kann auch der Aufwand hinsichtlich einer nachträglichen Bearbeitung der von der Kamera erzeugten Abbildung zum Ausgleich derartiger Effekte durch das Anpassen des Lichtquelleneinheit-Emissionsspektrums zu einem korrigierten Emissionsspektrum und das Erhöhen der Farbwiedergabequalität der Hintergrund-Wiedergabeeinrichtung minimiert werden.

Grundsätzlich kann es vorgesehen sein, dass die Steuereinrichtung dazu ausgebildet ist, das korrigierte Emissionsspektrum einem vorgegebenen Emissionsspektrum anzunähern, wozu ein solches vorgegebenes Emissionsspektrum beispielsweise in einem Speicher der Hintergrund-Wiedergabeeinrichtung hinterlegt sein kann. Beispielsweise kann ein Emissionsspektrum natürlichen weißen Lichts das vorgegebene Emissionsspektrum bilden, so dass die Steuereinrichtung dazu ausgebildet sein kann, das korrigierte Emissionsspektrum dem Emissionsspektrum natürlichen Lichts anzunähern. Es können jedoch auch verschiedene vorgegebene Emissionsspektren hinterlegt sein, beispielsweise Emissionsspektren natürlichen Lichts verschiedener Farbtemperaturen, wobei die Steuereinrichtung dazu ausgebildet sein kann, das korrigierte Emissionsspektrum einem natürlichen Emissionsspektrum anzunähern, dessen Farbtemperatur der Farbtemperatur des jeweiligen Lichtquelleneinheit-Emissionsspektrums entspricht. Ferner kann beispielsweise ein Beleuchtungs-Emissionsspektrum einer Beleuchtungseinrichtung als vorgegebenes Emissionsspektrum in einem Speicher hinterlegt sein, so dass das korrigierte Emissionsspektrum einem solchen vorgegebenen Beleuchtungs-Emissionsspektrum angenähert werden kann.

Alternativ dazu kann das Emissionsspektrum, welchem das korrigierte Emissionsspektrum anzunähern ist, jedoch auch vorgebbar sein, wozu ein Benutzer beispielsweise grundsätzlich beliebige Emissionsspektren an einer Eingabeeinrichtung eingeben und an die Steuereinrichtung übermitteln kann. Zudem kann es vorgesehen sein, dass das Emissionsspektrum durch weitere Einrichtungen, insbesondere eine Beleuchtungseinrichtung oder eine Messeinrichtung zum Messen eines Beleuchtungs-Emissionsspektrums einer Beleuchtungseinrichtung, vorgebbar ist, indem das jeweilige Emissionsspektrum oder eine Information darüber durch die entsprechende Einrichtung an die Steuereinrichtung übermittelbar sein können. Die Hintergrund-Wiedergabeeinrichtung kann insbesondere einen Signaleingang aufweisen, um entsprechende Informationen empfangen zu können.

Weitere Ausführungsformen sind den abhängigen Ansprüchen, der Beschreibung und den Zeichnungen zu entnehmen.

Bei einigen Ausführungsformen können die Hintergrund-Wiedergabeeinrichtung als eine LED-Wand und die Bildpunktelemente als Leuchtdiodeneinheiten ausgebildet sein. Die Lichtquellen und/oder die Korrekturlichtquellen können ferner als Leuchtdioden ausgebildet sein. Zudem können die Lichtquelleneinheiten insbesondere als Leuchtdiodeneinheiten ausgebildet sein.

Die Leuchtdioden einer solchen LED-Wand können beispielsweise als LED (Light Emitting Diode) oder als organische Leuchtdioden bzw. OLED (Organic Light Emitting Diode) ausgebildet sein. Ferner kann es bei einer LED-Wand grundsätzlich vorgesehen sein, dass die einzelnen Bildpunktelemente, welche gemeinsam die Darstellung des virtuellen Hintergrunds erzeugen, von einzelnen Leuchtdioden gebildet sind. Die einzelnen Bildpunktelemente können jedoch auch von jeweiligen Leuchtdiodeneinheiten gebildet sein, wobei jede Leuchtdiodeneinheit mehrere, insbesondere drei, Leuchtdioden als Lichtquellen umfassen kann. Beispielsweise kann eine Leuchtdiodeneinheit auch drei, vier oder mehr Leuchtdioden umfassen, wobei die mehreren Leuchtdioden einer Leuchtdiodeneinheit insbesondere unterschiedliche Emissionsspektren aufweisen können und optional mit einem Farbmischer ausgestattet sein können. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen.

Ferner können die Korrekturlichtquellen bei einigen Ausführungsformen als Leuchtdioden ausgebildet sein. Auch die Korrekturlichtquellen können insbesondere dazu ausgebildet sein, Licht mit einem schmalbandigen Korrekturlichtemissionsspektrum zu emittieren, wobei durch entsprechendes Mischen der Lichtquellen einer Lichtquelleneinheit und insbesondere mehrerer Korrekturlichtquellen ein aufgeweitetes und/oder verstetigtes korrigiertes Emissionsspektrum der Lichtquelleneinheit erzeugbar sein kann. Insbesondere können als Leuchtdioden ausgebildete Korrekturlichtquellen dazu ausgebildet sein, Licht mit einer sich von dem durch die Lichtquellen emittierten Licht unterscheidenden Farbe zu emittieren, um das Lichtquelleneinheit-Emissionsspektrum korrigieren zu können.

Bei einigen Ausführungsformen kann es ferner vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen.

Die Hintergrund-Wiedergabeeinrichtung kann bei einigen Ausführungsformen gewölbt ausgebildet sein. Die Hintergrund-Wiedergabeeinrichtung kann dadurch beispielsweise einen Schauspieler umgebend in dem virtuellen Bildaufnahmestudio angeordnet werden, so dass die Darstellung des virtuellen Hintergrunds insbesondere bei möglichst vielen Kameraausrichtungen bzw. Aufnahmewinkeln von der zugeordneten Kamera abgebildet werden kann, wenn die Kamera den Schauspieler beispielsweise aus unterschiedlichen Richtungen abbildet. Insbesondere kann die Hintergrund-Wiedergabeeinrichtung dazu ausgebildet sein, das reale Motiv und insbesondere einen Schauspieler derart zu umgeben, dass die Darstellung des virtuellen Hintergrunds und das reale Motiv über einen Aufnahmewinkelbereich von zumindest 180 Grad gemeinsam abbildbar sein können. Insbesondere kann die Hintergrund-Wiedergabeeinrichtung dazu sich in einer vertikalen Ausrichtung kreisbogenförmig um das reale Motiv herum erstreckend in dem virtuellen Bildaufnahmestudio angeordnet werden.

Ferner kann sich die Hintergrund-Wiedergabeeinrichtung bei einigen Ausführungsformen über eine Breite von mindestens 5 m und eine Höhe von mindestens 2 m erstrecken. Insbesondere kann die Hintergrund-Wiedergabeeinrichtung dadurch eine ausreichende Größe aufweisen, um mehrere Schauspieler vor einem gemeinsamen (virtuellen) Hintergrund aufnehmen zu können. Zudem kann es eine derart ausreichende Größe der Hintergrund-Wiedergabeeinrichtung beispielsweise ermöglichen, verschiedene reale Objekte, beispielsweise Möbel und/oder Sitzgelegenheiten, in dem virtuellen Bildaufnahmestudio zu positionieren und beispielsweise eine Filmszene unter Einbeziehung dieser realen Objekte und/oder mit sich bewegenden Schauspielern vor der Darstellung des virtuellen Hintergrunds aufzunehmen. Insbesondere kann sich die Darstellung des virtuellen Hintergrunds und/oder die Hintergrund-Wiedergabeeinrichtung über einen während einer typischen Aufnahme in dem virtuellen Bildaufnahmestudio, insbesondere einer Aufnahme einer von Schauspielern gespielten Szene, von der Kamera abgebildeten Abschnitt hinaus erstrecken, so dass sich die Darstellung des virtuellen Hintergrunds beispielsweise in der von der Kamera erzeugten Abbildung bis zu sämtlichen Rändern der Abbildung erstrecken kann und nicht auf einen Innenabschnitt der Abbildung beschränkt ist.

Die Hintergrund-Wiedergabeeinrichtung kann bei einigen Ausführungsformen ferner dazu ausgebildet sein, das reale Motiv zu beleuchten. Insbesondere kann dies Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann. Insbesondere im Hinblick auf eine solche Beleuchtung des realen Motivs kann eine durch die Korrekturlichtquellen erreichbare erhöhte Farbwiedergabequalität der Hintergrund-Wiedergabeeinrichtung deren Einsatzmöglichkeiten erweitern.

Bei einigen Ausführungsformen kann der virtuelle Hintergrund eine dreidimensionale Szene repräsentieren. Beispielsweise kann es sich bei dem virtuellen Hintergrund um eine Landschaft oder einen Raum handeln, in welcher oder in welchem eine in dem virtuellen Bildaufnahmestudio aufzunehmende Szene spielt. Insbesondere kann die an der Hintergrund-Wiedergabeeinrichtung wiedergegebene Darstellung des virtuellen Hintergrunds und/oder ein an dem zumindest einen Paneel wiedergegebener Abschnitt der Darstellung des virtuellen Hintergrunds einer Projektion der dreidimensionalen Szene bzw. eines Abschnitts der dreidimensionalen Szene auf die zweidimensionale Anordnung der Bildpunktelemente entsprechen.

Bei einigen Ausführungsformen kann die Hintergrund-Wiedergabeeinrichtung dazu ausgebildet sein, die Darstellung des virtuellen Hintergrunds während der Aufnahme zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar aufgezeichnet werden kann. Ein nachträgliches Überlagern der Aufnahme der Kamera mit einem vorgesehenen Hintergrund ist somit nicht mehr erforderlich.

Die Steuereinrichtung kann bei einigen Ausführungsformen dazu ausgebildet sein, das Lichtquelleneinheit-Emissionsspektrum derart anzupassen, dass ein Maximum des korrigierten Emissionsspektrums einem Maximum des Lichtquelleneinheit-Emissionsspektrums entspricht. Alternativ oder zusätzlich kann die Steuereinrichtung bei einigen Ausführungsformen dazu ausgebildet sein, dass eine einem Maximum des korrigierten Emissionsspektrums zugeordnete Wellenlänge einer einem Maximum des Lichtquelleneinheit-Emissionsspektrums zugeordneten Wellenlänge entspricht.

Insbesondere kann die Steuereinrichtung dazu ausgebildet sein, das Lichtquelleneinheit-Emissionsspektrum derart anzupassen, dass das korrigierte Emissionsspektrum einem Emissionsspektrum natürlichen Lichts mit der durch das Lichtquelleneinheit-Emissionsspektrum definierten Farbtemperatur angenähert ist. Dazu kann insbesondere eine Wellenlänge, bei welcher das korrigierte Emissionsspektrum ein Maximum erreicht, einer Wellenlänge entsprechen, bei welcher das Lichtquelleneinheit-Emissionsspektrum ein Maximum erreicht. Folglich kann die Steuereinrichtung dazu ausgebildet sein, das Lichtquelleneinheit-Emissionsspektrum derart anzupassen, dass weiterhin an dem jeweiligen Bildpunktelement die vorgegebene und/oder die dem Lichtquelleneinheit-Emissionsspektrum zugeordnete Farbe wiedergegeben wird, wobei das von dem Bildpunktelement emittierte korrigierte Emissionsspektrum jedoch einem Spektrum angenähert sein kann, welches ein durch das Bildpunktelement repräsentierter Bildpunkt in einem dem virtuellen Hintergrund entsprechenden realen Hintergrund, in welchem letztlich natürliches Licht von dem Bildpunkt reflektiert wird, ausstrahlt. Dies kann es insbesondere ermöglichen, mittels der Hintergrund-Wiedergabeeinrichtung eine Darstellung eines grundsätzlich beliebigen virtuellen Hintergrunds, beispielsweise einer Landschaft, wiederzugeben, indem Farben aus einem großen Farbraum an der Hintergrund-Wiedergabeeinrichtung wiedergegeben werden können. Zudem kann jedoch das von der Hintergrund-Wiedergabeeinrichtung bzw. den Bildpunktelementen emittierte Licht bei einer Reflexion durch ein reales Motiv in dem Bildaufnahmestudio derart reflektiert werden, wie es bei einer Beleuchtung durch natürliches Licht und somit in einem dem virtuellen Hintergrund entsprechenden realen Hintergrund, also beispielsweise in der realen Landschaft, zu erwarten wäre. Insgesamt kann dadurch ein natürlicher Eindruck einer in dem virtuellen Bildaufnahmestudio aufgenommenen Szene sowie eine hohe Farbwiedergabequalität erreicht werden, wodurch gegebenenfalls erforderliche Nachbearbeitungen reduziert werden können.

Indem die Steuereinrichtung zudem dazu ausgebildet sein kann, das Lichtquelleneinheit-Emissionsspektrum derart anzupassen, dass ein Maximum des korrigierten Emissionsspektrums einem Maximum des Lichtquelleneinheit-Emissionsspektrums entspricht, kann insbesondere auch eine Helligkeit des von dem Bildpunktelement emittierten Lichts durch das Anpassen des Lichtquelleneinheit-Emissionsspektrum unverändert oder zumindest allenfalls geringfügig verändert werden. Insbesondere können somit die an dem Bildpunktelement wiedergegebenen Bildinformationen durch das Anpassen des Lichtquelleneinheit-Emissionsspektrums im Wesentlichen unverändert bleiben, so dass die wiedergegebene Darstellung des virtuellen Hintergrunds durch das Anpassen des Lichtquelleneinheit-Emissionsspektrums im Wesentlichen für einen Beobachter unverändert bleiben kann.

Bei einigen Ausführungsformen kann die erste Lichtquelle dazu ausgebildet sein, rotes Licht zu emittieren, die zweite Lichtquelle kann dazu ausgebildet sein, grünes Licht zu emittieren, und die dritte Lichtquelle kann dazu ausgebildet sein, blaues Licht zu emittieren. Die Lichtquelleneinheiten können somit insbesondere jeweilige Rot-Grün-Blau(RGB-)-Einheiten bilden, wobei durch additives Mischen dieser drei Grundfarben ein großer (RGB-) Farbraum abgebildet und an der Hintergrund-Wiedergabeeinrichtung bzw. dem zumindest einen Paneel wiedergegeben werden kann. Insbesondere können solche RGB-Einheiten auch bei bereits bestehenden Hintergrund-Wiedergabeeinrichtungen vorgesehen sein, sodass derartige Hintergrund-Wiedergabeeinrichtungen beispielsweise durch Anbringen von Korrekturlichtquellen und entsprechendes Anpassen der Steuereinrichtungen zur Verbesserung der Farbwiedergabequalität im Sinne der vorliegenden Offenbarung nachgerüstet werden können. Eine komplette Neukonstruktion von Hintergrund-Wiedergabeeinrichtungen oder deren Paneele, um eine verbesserte Farbwiedergabequalität zu erreichen, ist daher nicht zwangsläufig erforderlich.

Bei einigen Ausführungsformen können das erste Emissionsspektrum, das zweite Emissionsspektrum und das dritte Emissionsspektrum schmalbandige Emissionsspektren um ein jeweiliges Emissionsmaximum bilden.

Beispielsweise können diese Emissionsmaxima, zumindest die Emissionsmaxima zweier Emissionsspektren der drei Emissionsspektren, im sichtbaren Lichtspektrum weit außen liegen, um einen möglichst großen Farbraum mittels der Lichtquelleneinheiten wiedergeben zu können. Insbesondere können die Emissionsspektren von jeweiligen Leuchtdioden erzeugt werden, als welche die Lichtquellen ausgebildet sein können und welche zur Emission schmalbandiger Emissionsspektren geeignet sein können. Insbesondere können das erste Emissionsspektrum, das zweite Emissionsspektrum und das dritte Emissionsspektrum annähernd monochromatisches Licht emittieren. Das erste Emissionsspektrum, das zweite Emissionsspektrum und das dritte Emissionsspektrum kann sich insofern von einem Emissionsspektrum natürlichen Lichts, insbesondere bei der von der ersten Lichtquelle, der zweiten Lichtquelle und der dritten Lichtquellen generierten Farbe, unterscheiden.

Die Steuereinrichtung kann bei einigen Ausführungsformen dazu ausgebildet sein, die Lichtquelleneinheit-Emissionsspektren durch Ansteuern der Korrekturlichtquellen einem Schwarzkörper-Spektrum anzunähern. Insbesondere kann die Steuereinrichtung somit dazu ausgebildet sein, durch Mischen des ersten Emissionsspektrums, des zweiten Emissionsspektrums und des dritten Emissionsspektrums der Lichtquellen einer Lichtquelleneinheit mit den Emissionsspektren der Korrekturlichtquellen die jeweiligen Emissionsspektren der Lichtquellen gewissermaßen zu verbinden und Lücken in dem Lichtquelleneinheit-Emissionsspektrum zu überbrücken, um das korrigierte Emissionsspektrum der Lichtquelleneinheit einem kontinuierlichen Schwarzkörperspektrum natürlichen Lichts anzunähern. Insbesondere kann die Steuereinrichtung daher dazu ausgebildet sein, das Lichtquelleneinheit-Emissionsspektrum durch Ansteuern der Korrekturlichtquellen zu verstetigen, um beispielsweise Sprünge zwischen den einzelnen Maxima des ersten Emissionsspektrums, des zweiten Emissionsspektrums und des dritten Emissionsspektrums in dem Lichtquelleneinheit-Emissionsspektrum auszugleichen.

Da der von der Hintergrund-Wiedergabeeinrichtung erzeugbare Farbraum bei einigen Ausführungsformen über einen durch Schwarzkörperstrahlung generierbaren Farbraum hinausgehen kann, kann eine solche Annäherung an ein Schwarzkörperspektrum und/oder das Emissionsspektrum natürlichen Lichts somit insbesondere erfolgen, indem das Lichtquelleneinheit-Emissionsspektrum verstetigt, aufgeweitet und/oder ein kontinuierlicheres korrigiertes Emissionsspektrum generiert wird. Zudem kann es vorgesehen sein, dass die Steuereinrichtung dazu ausgebildet ist, dem Lichtquelleneinheit-Emissionsspektrum durch Ansteuern der Korrekturlichtquellen ein der von der Lichtquelleneinheit generierten Farbe möglichst naheliegendes Schwarzkörperspektrum zu unterlegen, sodass dieses Schwarzkörperspektrum die Reflexion des von der Hintergrund-Wiedergabeeinrichtung bzw. einem Bildpunktelement emittierten Lichts durch das reale Motiv zumindest beeinflussen und einer Reflexion bei natürlichen Lichtverhältnissen annähern kann.

Die Steuereinrichtung kann bei einigen Ausführungsformen ferner dazu ausgebildet sein, die Lichtquelleneinheit-Emissionsspektren durch Ansteuern der Korrekturlichtquellen einem Schwarzkörper-Spektrum anzunähern, dessen Maximum einem Maximum des jeweiligen Lichtquelleneinheit-Emissionsspektrums entspricht. Zudem kann die Steuereinrichtung dazu ausgebildet sein, die Lichtquelleneinheit-Emissionsspektren durch Ansteuern der Korrekturlichtquellen einem Schwarzkörper-Spektrum anzunähern, dessen Maximum bei einer Wellenlänge liegt, bei welcher auch das Lichtquelleneinheit-Emissionsspektrum sein Maximum erreicht. Insbesondere, wenn die von der Lichtquelleneinheit generierte Farbe einer durch Schwarzkörperstrahlung generierbaren Farbe entspricht, kann die Steuereinrichtung somit dazu ausgebildet sein, das Lichtquelleneinheit-Emissionsspektrum an das entsprechende Schwarzkörperspektrum anzupassen, ohne jedoch die von dem Bildpunktelement emittierte Farbe und/oder Helligkeit zu verändern. Die Darstellung des virtuellen Hintergrunds kann somit insbesondere im Wesentlichen unverändert wiedergegeben werden, wobei jedoch die Farbwiedergabequalität durch eine derartige Anpassung des Lichtquelleneinheit-Emissionsspektrums verbessert werden kann.

Bei einigen Ausführungsformen kann die Steuereinrichtung dazu ausgebildet sein, zum Generieren eines Lichtquelleneinheit-Emissionsspektrums Intensitäten und/oder Helligkeiten der jeweiligen ersten Lichtquelle, zweiten Lichtquelle und dritten Lichtquelle anzupassen.

Insbesondere kann durch die jeweilige Intensität und/oder Helligkeit der Lichtquellen ein Beitrag des zugeordneten ersten Emissionsspektrums, zweiten Emissionsspektrums und dritten Emissionsspektrums zu dem Lichtquelleneinheit-Emissionsspektrum festgelegt werden, um dadurch eine von dem jeweiligen Bildpunktelement emittierte Farbe in dem durch die Lichtquelleneinheiten festgelegten Farbraum zu erzeugen. Insofern kann die Steuereinrichtung insbesondere dazu ausgebildet sein, für die erste Lichtquelle, die zweite Lichtquelle und die dritte Lichtquelle einer Lichtquelleneinheit individuell eine jeweilige Intensität und/oder Helligkeit festzulegen und/oder einzustellen.

Die erste Steuereinrichtung kann bei einigen Ausführungsformen ferner dazu ausgebildet sein, das Lichtquelleneinheit-Emissionsspektrum durch Anpassen einer Intensität und/oder Helligkeit der Korrekturlichtquellen anzupassen. Insbesondere kann auch durch Anpassen einer Intensität und/oder Helligkeit der Korrekturlichtquellen letztlich ein jeweiliger Beitrag eines Emissionsspektrums einer Korrekturlichtquelle zu dem korrigierten Emissionsspektrum der Lichtquelleneinheit bestimmt werden.

Bei einigen Ausführungsformen kann jeder der Lichtquelleneinheiten zumindest eine jeweilige Korrekturlichtquelle zugeordnet sein. Insbesondere kann die Steuereinrichtung bei solchen Ausführungsformen dazu ausgebildet sein, durch Ansteuern der jeweiligen Korrekturlichtquelle das Lichtquelleneinheit-Emissionsspektrum jeder Lichtquelleneinheit individuell anzupassen, um das Lichtquelleneinheit-Emissionsspektrum einem vorgegebenen oder vorgebbaren Emissionsspektrum anzunähern. Insbesondere kann daher an jedem Bildpunktelement das von dem Bildpunktelement emittierte Emissionsspektrum individuell durch Ansteuern der Korrekturlichtquellen anpassbar sein, um von jedem Bildpunktelement ein dem vorgegebenen oder vorgebbaren Emissionsspektrum angenähertes Emissionsspektrum emittieren zu können.

Ferner können bei einigen Ausführungsformen jeder der Lichtquelleneinheiten mehrere Korrekturlichtquellen zugeordnet sein, wobei jede der mehreren Korrekturlichtquellen dazu ausgebildet sein kann, ein jeweiliges Korrekturlichtemissionsspektrum zu erzeugen. Insbesondere können die mehreren Korrekturlichtquellen dazu ausgebildet sein, sich voneinander unterscheidende jeweilige Korrekturlichtemissionsspektren zu erzeugen.

Durch eine derartige Zuordnung mehrerer Korrekturlichtquellen zu einer jeweiligen Lichtquelleneinheit können insbesondere die Möglichkeiten zur Beeinflussung des Lichtquelleneinheit-Emissionsspektrums erweitert werden. Beispielsweise kann es vorgesehen sein, jeder der mehreren Lichtquelleneinheiten zumindest eine Korrekturlichtquelle mit einem Emissionsspektrum zuzuordnen, dessen Maximum bei einer Wellenlänge erreicht wird, welche zwischen der Wellenlänge des Maximums des ersten Emissionsspektrums und der Wellenlänge des Maximums des zweiten Emissionsspektrums liegt. Ferner kann jeder Lichtquelleneinheit zumindest eine Korrekturlichtquelle zugeordnet sein, die ein Emissionsspektrum mit einem Maximum bei einer Wellenlänge zwischen jeweiligen Wellenlängen aufweist, bei welchen das zweite Emissionsspektrums und das dritte Emissionsspektrum ihr jeweiliges Maximum erreichen. Durch eine derartige Anordnung von Korrekturlichtquellen an den Lichtquelleneinheiten kann das Lichtquelleneinheit-Emissionsspektrum durch entsprechendes Ansteuern der Korrekturlichtquellen insbesondere sowohl zwischen dem ersten Emissionsspektrum und dem zweiten Emissionsspektrum bzw. deren Maxima als auch zwischen dem zweiten Emissionsspektrum und dem dritten Emissionsspektrum bzw. deren Maxima beeinflussbar sein, um eine Annäherung an das vorgegebene oder vorgebbare Emissionsspektrum und insbesondere das Emissionsspektrum natürlichen Lichts zu ermöglichen und/oder das Lichtquelleneinheit-Emissionsspektrum zu verstetigen.

Die Steuereinrichtung kann bei einigen Ausführungsformen dazu ausgebildet sein, Einstellanweisungen für die Ansteuerung der Korrekturlichtquellen in Abhängigkeit von der Ansteuerung der Lichtquelleneinheiten zu ermitteln. Beispielsweise kann die Steuereinrichtung dazu ausgebildet sein, in Abhängigkeit von einer an einem jeweiligen Bildpunktelement zu erzeugenden Farbe, welche letztlich durch das Ansteuern der Lichtquelleneinheiten und Mischen deren Emissionsspektren generiert werden kann, jeweilige Einstellanweisungen für die Ansteuerung der Korrekturlichtquellen zu ermitteln, um das von der Lichtquelleneinheit generierte Lichtquelleneinheit-Emissionsspektrum beispielsweise einem Emissionsspektrum natürlichen Lichts bei der eingestellten Farbe anzunähern.

Bei einigen Ausführungsformen kann die Steuereinrichtung mit einem Speicher verbunden und dazu ausgebildet sein, die Einstellanweisungen in Abhängigkeit von der Ansteuerung der Lichtquelleneinheiten in einer in dem Speicher gespeicherten Nachschlagetabelle nachzuschlagen. Beispielsweise kann in einer solchen Nachschlagetabelle eine Information dazu angegeben sein, wie die Korrekturlichtquellen in Abhängigkeit von einem an der Lichtquelleneinheit bzw. dem Bildpunktelement eingestellten Farbwert oder einer Farbtemperatur anzusteuern sind. Solche Ansteuerungen können insbesondere durch vorherige Kalibrierung der Lichtquelleneinheiten und/oder der Korrekturlichtquellen festgelegt werden. Insbesondere kann die Ansteuerung der Korrekturlichtquellen durch ein solches Zugreifen auf eine Nachschlagetabelle schnell erfolgen, indem die Einstellanweisungen für die Korrekturlichtquellen unmittelbar durch die an die Steuereinrichtung übermittelten Bildinformationen für ein jeweiliges Bildpunktelement, welche die wiederzugebende Farbe und/oder Helligkeit an dem jeweiligen Bildpunktelement zum Wiedergeben der Darstellung des virtuellen Hintergrunds umfassen kann, festgelegt und abrufbar sein können.

Die Steuereinrichtung kann bei einigen Ausführungsformen ferner dazu ausgebildet sein, die Lichtquelleneinheit-Emissionsspektren in Abhängigkeit von der Ansteuerung der jeweiligen Lichtquellen und/oder das korrigierte Emissionsspektrum in Abhängigkeit von der Ansteuerung der Korrekturlichtquellen zu ermitteln.

Beispielsweise kann die Steuereinrichtung dazu ausgebildet sein, die Lichtquelleneinheit-Emissionsspektren in Abhängigkeit von jeweiligen eingestellten Intensitäten und/oder Helligkeiten der ersten Lichtquelle, der zweiten Lichtquelle und der dritten Lichtquelle zu ermitteln. Insbesondere können dazu die jeweiligen ersten Emissionsspektren, zweiten Emissionsspektren und dritten Emissionsspektren in einem mit der Steuereinrichtung verbundenen Speicher hinterlegt sein, sodass die Steuereinrichtung für jeweilige Einstellungen bzw. Ansteuerungen der einzelnen Lichtquellen Beiträge deren Emissionsspektren zu dem Lichtquelleneinheit-Emissionsspektrum ermitteln und durch Zusammenfügen der einzelnen Beiträge das Lichtquelleneinheit-Emissionsspektrum bestimmen kann. Ebenso kann die Steuereinrichtung dazu ausgebildet sein, durch Auslesen eines Speichers auf die Emissionsspektren der Korrekturlichtquellen zurückzugreifen und die Korrekturlichtemissionsspektren in Abhängigkeit von einer Ansteuerung der Korrekturlichtquellen, insbesondere einer eingestellten Intensität und/oder Helligkeit, zu ermitteln. Insbesondere kann die Steuereinrichtung dazu ausgebildet sein, die Emissionsspektren der Lichtquellen und/oder der Korrekturlichtquellen zu berechnen.

Bei einigen Ausführungsformen kann die Steuereinrichtung mit einem Speicher verbunden sein, in welchem das erste Emissionsspektrum, das zweite Emissionsspektrum und das dritte Emissionsspektrum und/oder Emissionsspektren der Korrekturlichtquellen gespeichert sind.

Beispielsweise können in dem Speicher die jeweiligen Emissionsspektren als Histogramme gespeichert sein, wobei alternativ oder zusätzlich dazu in dem Speicher auch Parameter und/oder Rechenanweisungen zum Bestimmen von Kurven, die das jeweilige Emissionsspektrum beschreiben, hinterlegt sein können. Insbesondere kann es sich bei einem dieser Parameter um eine Helligkeit und/oder Intensität der jeweiligen Lichtquelle oder Korrekturlichtquelle handeln, um ein Ermitteln des jeweiligen Emissionsspektrums in Abhängigkeit von einer solchen Einstellung bzw. Ansteuerung der Lichtquelle oder Korrekturlichtquelle zu ermöglichen. Der Steuereinrichtung können somit mittels des Speichers Informationen bereitgestellt werden, die das Ermitteln des Lichtquelleneinheit-Emissionsspektrums als Mischung der Emissionsspektren der Lichtquellen und/oder das Bestimmen des korrigierten Emissionsspektrums bei zusätzlichem Mischen der Emissionsspektren der Korrekturlichtquellen zu dem Lichtquelleneinheit-Emissionsspektrum ermöglichen.

Die Steuereinrichtung kann bei einigen Ausführungsformen dazu ausgebildet sein, das korrigierte Emissionsspektrum durch Überlagern der Emissionsspektren der Lichtquellen und der Korrekturlichtquellen zu bestimmen. Insbesondere kann die Steuereinrichtung dazu auf jeweilige in dem vorstehend genannten Speicher, insbesondere einen Halbleiterspeicher, gespeicherte Emissionsspektren zurückgreifen, um einen Beitrag eines jeweiligen Emissionsspektrums beispielsweise anhand einer Helligkeit und/oder Intensität der jeweiligen Lichtquelle und/oder Korrekturlichtquelle zu bestimmen. Durch Überlagern der derart bestimmten einzelnen Emissionsspektren bzw. Beiträge kann sodann letztlich das bei einer bestimmten Ansteuerung der Korrekturlichtquellen und/oder der Lichtquellen emittierte korrigierte Emissionsspektrum mittels der Steuereinrichtung bestimmbar sein.

Die Steuereinrichtung kann bei einigen Ausführungsformen dazu ausgebildet sein, die Einstellanweisungen durch ein Näherungsverfahren zu bestimmen. Insbesondere kann die Steuereinrichtung dazu ausgebildet sein, ein bestimmtes korrigiertes Emissionsspektrum, beispielsweise durch Überlagern der Emissionsspektren der Lichtquellen der Lichtquelleneinheit und der Korrekturlichtquellen, mit dem vorgegebenen oder vorgebbaren Emissionsspektrum und insbesondere dem Emissionsspektrum natürlichen Lichts bei einer bestimmten Farbe zu vergleichen, um das (ermittelte und/oder berechnete) korrigierte Emissionsspektrum durch Anpassen der Ansteuerung der Korrekturlichtquellen dem Emissionsspektrum natürlichen Lichts zunehmend anzunähern. Die Einstellanweisungen für die Ansteuerung der Korrekturlichtquellen kann insofern insbesondere durch solche Einstellanweisungen bestimmt sein, bei welchen das korrigierte Emissionsspektrum dem vorgegebenen oder vorgebbaren Emissionsspektrum am nächsten kommt. Insbesondere kann dazu auch das vorgegebene oder vorgebbare Emissionsspektrum in einem Speicher gespeichert oder in einen Speicher einschreibbar sein, auf welchen die Steuereinrichtung zugreifen kann. Wiederum kann dazu das vorgegebene oder vorgebbare Emissionsspektrum beispielsweise als Histogramm in dem Speicher gespeichert sein, wobei es auch vorgesehen sein kann, dass in einem solchen Speicher Parameter von Kurven gespeichert sind, die das vorgegebene oder vorgebbare Emissionsspektrum beschreiben. Einer dieser Parameter kann insbesondere ein bestimmter Farbwert sein, welcher beispielsweise einer durch das Ansteuern der ersten Lichtquelle, zweiten Lichtquelle und dritten Lichtquelle von dem Bildpunktelemente wiedergegebenen Farbe entsprechen kann. Es können jedoch auch verschiedene vorgegebene oder vorgebbare Emissionsspektren für verschiedene Farbwerte in dem Speicher gespeichert sein.

Die Steuereinrichtung kann bei einigen Ausführungsformen dazu ausgebildet sein, ein bei jeweiligen Einstellanweisungen zu erwartendes korrigiertes Emissionsspektrum mit dem vorgegebenen oder vorgebbaren Emissionsspektrum zu vergleichen und eine Abweichung zwischen dem zu erwartenden korrigierten Emissionsspektrum und dem vorgegebenen oder vorgebbaren Emissionsspektrum zu bestimmen. Ferner kann die Steuereinrichtung dazu ausgebildet sein, die Einstellanweisungen durch Minimieren der Abweichung zu ermitteln. Beispielsweise kann die Steuereinrichtung dazu ausgebildet sein, eine mittlere quadratische Abweichung zwischen dem erwarteten korrigierten Emissionsspektrum und dem vorgegebenen oder vorgebbaren Emissionsspektrum zu bestimmen, um durch Minimieren der mittleren quadratischen Abweichung die Einstellanweisungen für die Korrekturlichtquellen zu bestimmen. Die Steuereinrichtung kann auch dazu ausgebildet sein, die Einstellanweisungen durch einen Chi-Quadrat-Test zu bestimmen. Insbesondere kann die Steuereinrichtung dazu, wie bereits erwähnt, mit einem Speicher verbunden sein, in welchem Informationen zu den Emissionsspektren der Lichtquellen und/oder der Korrekturlichtquellen sowie zu dem vorgegebenen oder vorgebbaren Emissionsspektrum, insbesondere zu jeweiligen Emissionsspektren natürlichen Lichts bei verschiedenen Farbwerten, gespeichert sein können.

Die Hintergrund-Wiedergabeeinrichtung kann bei einigen Ausführungsformen einen Signaleingang zum Empfangen einer Information über ein von einer Beleuchtungseinrichtung des virtuellen Bildaufnahmestudios, insbesondere einem Scheinwerfer, erzeugten Beleuchtungs-Emissionsspektrum aufweisen, wobei die Steuereinrichtung dazu ausgebildet sein kann, das korrigierte Emissionsspektrum dem Beleuchtungs-Emissionsspektrum anzunähern. Das Beleuchtungs-Emissionsspektrum kann somit das vorgegebene oder vorgebbare Emissionsspektrum bilden, so dass die Steuereinrichtung dazu ausgebildet sein kann, das Emissionsspektrum der Hintergrund-Wiedergabeeinrichtung auf die Beleuchtung des virtuellen Bildaufnahmestudios abzustimmen. Durch dieses Annähern des korrigierten Emissionsspektrums an das Beleuchtungs-Emissionsspektrum können insbesondere etwaige Farbdifferenzen in einer von der Kamera erzeugten Abbildung des sowohl von der Hintergrund-Wiedergabeeinrichtung als auch der Beleuchtungseinrichtung beleuchteten realen Motivs aufgrund dessen spektraler Reflexionseigenschaften vermieden werden.

Der Signaleingang kann beispielsweise dazu ausgebildet sein, Informationen und/oder Metadaten von der Beleuchtungseinrichtung zu empfangen, anhand derer das Beleuchtungs-Emissionsspektrum bestimmbar ist oder welche das Beleuchtungs-Emissionsspektrum repräsentieren. Insbesondere kann es sich dabei um Parameter von Einstellungen eines Scheinwerfers handeln, beispielsweise einer Farbeinstellung des emittierten Lichts oder einer Helligkeitseinstellung. Zudem kann es vorgesehen sein, dass der Signaleingang mit einer Messeinrichtung verbindbar ist, welche dazu ausgebildet ist, das Beleuchtungs-Emissionsspektrum zu ermitteln.

Insbesondere kann der Signaleingang ferner dazu ausgebildet sein, während einer Aufnahme kontinuierlich Informationen über das Beleuchtungs-Emissionsspektrum zu empfangen und der Steuereinrichtung bereitzustellen, wobei die Steuereinrichtung dazu ausgebildet sein kann, die Korrekturlichtquellen stets derart anzusteuern, dass das korrigierte Emissionsspektrum dem aktuellen Beleuchtungs-Emissionsspektrum angenähert ist. Dies kann es insbesondere ermöglichen, auf eine sich während einer Aufnahme möglicherweise ändernde Beleuchtung zu reagieren und die Korrekturlichtquellen entsprechend anzusteuern.

Die Lichtquelleneinheiten und/oder die Lichtquellen können bei einigen Ausführungsformen in einem regelmäßigen Raster angeordnet sein, wobei die Korrekturlichtquellen zwischen mehreren der Lichtquelleneinheiten und/oder der Lichtquellen des regelmäßigen Rasters angeordnet sein können. Alternativ dazu kann es auch vorgesehen sein, dass die Korrekturlichtquellen anstelle einer jeweiligen Lichtquelle des regelmäßigen Rasters angeordnet sind.

Insbesondere kann es eine solche Einfügung der Korrekturlichtquellen in das regelmäßige Raster ermöglichen, die Korrekturlichtquellen in bereits bestehende Hintergrund-Wiedergabeeinrichtungen einzufügen. Beispielsweise kann bei einer Hintergrund-Wiedergabeeinrichtung einer jeweiligen Lichtquelleneinheit eine Fläche an dem zumindest ein Paneel zugewiesen sein, welche nicht vollständig von der ersten Lichtquelle, der zweiten Lichtquelle und der dritten Lichtquelle vereinnahmt wird, sodass in einer der Lichtquelleneinheit zugewiesenen Fläche noch eine ausreichende Freifläche zum Anbringen einer oder mehrerer Korrekturlichtquellen bestehen kann. Derartige Hintergrund-Wiedergabeeinrichtungen können somit ohne das Erfordernis einer grundsätzlichen Neustrukturierung beispielsweise mit solchen Korrekturlichtquellen nachgerüstet werden, um durch entsprechendes Anpassen der Steuereinrichtung eine Verbesserung der Farbwiedergabequalität erreichen zu können. Dazu können die Korrekturlichtquellen beispielsweise auch kleiner als die Lichtquellen ausgebildet sein. Es kann jedoch auch vorgesehen sein, die Korrekturlichtquellen anstelle einer jeweiligen Lichtquelle in dem regelmäßigen Raster anzuordnen, sodass jeweilige Lichtquelleneinheiten beispielsweise nach dem Anbringen der Korrekturlichtquellen gegenüber einer herkömmlichen Anordnung verschoben sein können.

Bei einigen Ausführungsformen kann die Hintergrund-Wiedergabeeinrichtung mehrere Paneele umfassen, wobei jedes der mehreren Paneele rechteckig und insbesondere quadratisch ausgebildet sein kann. Ferner kann jedes der mehreren Paneele und insbesondere auch das zumindest eine Paneel randlos ausgebildet sein. Die mehrere Paneele können zudem in einer zumindest zweidimensionalen Matrix angeordnet sein. Insbesondere kann die Hintergrund-Wiedergabeeinrichtung somit durch mehrere Paneele zusammengesetzt sein, welche eine jeweilige Vielzahl von Bildpunktelementen aufweisen. Indem diese Paneele randlos ausgebildet sein können, kann insbesondere erreicht werden, dass die Darstellung des virtuellen Hintergrunds auch an einem Übergang zwischen verschiedenen Paneelen ohne Unterbrechung dargestellt werden kann.

Die Erfindung betrifft ferner ein Hintergrund-Wiedergabesystem mit einer Hintergrund-Wiedergabeeinrichtung der hierin offenbaren Art und mit einer Beleuchtungseinrichtung, insbesondere einem Scheinwerfer, welche dazu ausgebildet ist, ein Beleuchtungs-Emissionsspektrum zur Beleuchtung des realen Motivs in dem virtuellen Bildaufnahmestudio zu erzeugen. Die Hintergrund-Wiedergabeeinrichtung weist ferner einen Signaleingang zum Empfangen einer Information über das Beleuchtungs-Emissionsspektrum auf und die Steuereinrichtung ist dazu ausgebildet, das korrigierte Emissionsspektrum dem Beleuchtungs-Emissionsspektrum anzunähern.

Bei einem solchen Hintergrund-Wiedergabesystem kann das von der Hintergrund-Wiedergabeeinrichtung generierte Emissionsspektrum somit dem Beleuchtungs-Emissionsspektrum angenähert werden, so dass Reflexionen durch das reale Motiv, welches sowohl von der Beleuchtungseinrichtung als auch von der Hintergrund-Wiedergabeeinrichtung angestrahlt und dadurch beleuchtet werden kann, stets gleichartig erfolgen. Etwaige Farbverschiebungen in einer von einer Kamera erzeugten Abbildung in Abhängigkeit davon, ob das reale Motiv von der Beleuchtungseinrichtung oder von der Hintergrund-Wiedergabeeinrichtung beleuchtet wird, können dadurch vermieden werden.

Bei einigen Ausführungsformen kann der Signaleingang mit einer Messeinrichtung zum Messen des Beleuchtungs-Emissionsspektrums verbunden sein. Alternativ oder zusätzlich kann der Signaleingang bei einigen Ausführungsformen mit der Beleuchtungseinrichtung verbunden und die Beleuchtungseinrichtung kann dazu ausgebildet sein, die Information über das Beleuchtungs-Emissionsspektrum an den Signaleingang zu übermitteln. Insbesondere kann die Steuereinrichtung dazu ausgebildet sein, das korrigierte Emissionsspektrum stets einem aktuellen Beleuchtungs-Emissionsspektrum anzunähern, um auf eine sich während einer Aufnahme verändernde Beleuchtung reagieren zu können.

Die Erfindung betrifft ferner ein Verfahren zum Aufnehmen eines realen Motivs vor einem virtuellen Hintergrund in einem virtuellen Bildaufnahmestudio. Bei diesen Verfahren wird eine Darstellung des virtuellen Hintergrunds an einer Hintergrund-Wiedergabeeinrichtung der hierin offenbarten Art wiedergegeben, das reale Motiv wird vor der Hintergrund-Wiedergabeeinrichtung platziert und das reale Motiv wird vor der Darstellung des virtuellen Hintergrunds mittels einer Kamera aufgenommen. Insbesondere kann das Lichtquelleneinheit-Emissionsspektrum bei dem Verfahren zu einem korrigierten Emissionsspektrum angepasst werden, welches einem vorgegebenen oder vorgebbaren Emissionsspektrum, insbesondere einem Emissionsspektrum natürlichen Lichts oder einem Beleuchtungs-Emissionsspektrum einer Beleuchtungseinrichtung des virtuellen Bildaufnahmestudios, angenähert ist.

Insbesondere kann die Hintergrund-Wiedergabeeinrichtung dazu eine Breite von zumindest 5 m und eine Höhe von zumindest 2 m aufweisen, sodass beispielsweise ein Schauspieler oder mehrere Schauspieler, insbesondere auch sich bewegende Schauspieler, vor der Darstellung des virtuellen Hintergrunds mittels einer zugeordneten Kamera abgebildet werden können, ohne dass sich ein Abbildungsfenster der Kamera, welches den von der Kamera abgebildeten Bereich bestimmt, über die Hintergrund-Wiedergabeeinrichtung hinaus erstreckt. Die Hintergrund-Wiedergabeeinrichtung kann somit eine Größe aufweisen, die das Abbilden des realen Motivs, insbesondere eines Schauspielers oder mehrerer Schauspieler, in einer durch den virtuellen Hintergrund repräsentierten virtuellen Umgebung ermöglicht, beispielsweise einer Landschaft oder einem Raum.

Die Erfindung wird im Folgenden rein beispielhaft anhand eines Ausführungsbeispiels unter Bezugnahme auf die Zeichnungen erläutert.

Es zeigen:
- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds und mit einer Kamera,
- Fig. 2: eine schematische Darstellung einer für eine Aufnahme in dem Bildaufnahmestudio vorgesehenen Kamera,
- Fig. 3A und 3B: eine jeweilige schematische Darstellung einer Lichtquelleneinheit der Hintergrund-Wiedergabeeinrichtung zur Veranschaulichung deren Ansteuerung während einer Wiedergabe der Darstellung des virtuellen Hintergrunds, und
- Fig. 4: eine weitere schematische Darstellung eines Aufnahmesystems für ein Bildaufnahmestudio mit einem Hintergrundwiedergabesystem, welches eine Hintergrund-Wiedergabeeinrichtung zur Wiedergabe einer Darstellung eines virtuellen Hintergrunds und eine Beleuchtungseinrichtung umfasst.

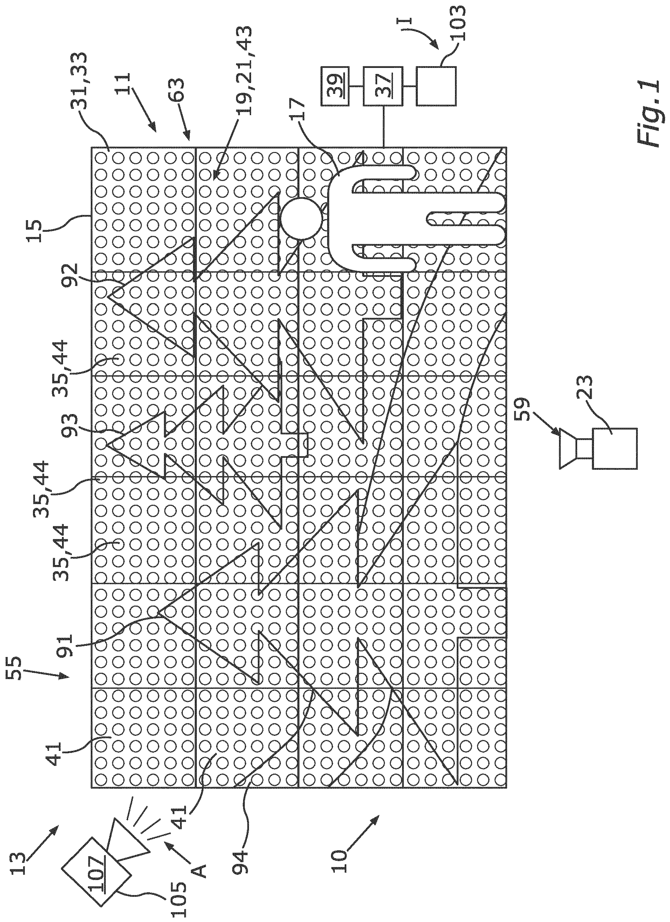

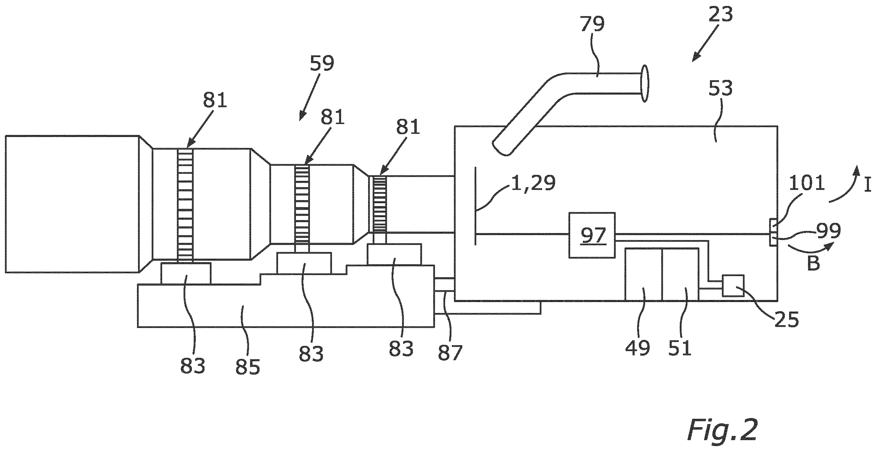

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 1 mit mehreren lichtempfindlichen Sensorelementen angeordnet sein, auf welche durch eine Blendenöffnung einer Blende eindringendes Licht mittels eines Linsensystems bzw. zumindest einer Linse zum Erzeugen einer Abbildung geleitet werden kann (vgl. auch Fig. 2).

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine aktive Beleuchtungseinrichtung 31, welche insbesondere als LED-Wand 33 ausgebildet ist, um eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung und in einem regelmäßigen Raster 55 nebeneinander angeordnet sind.

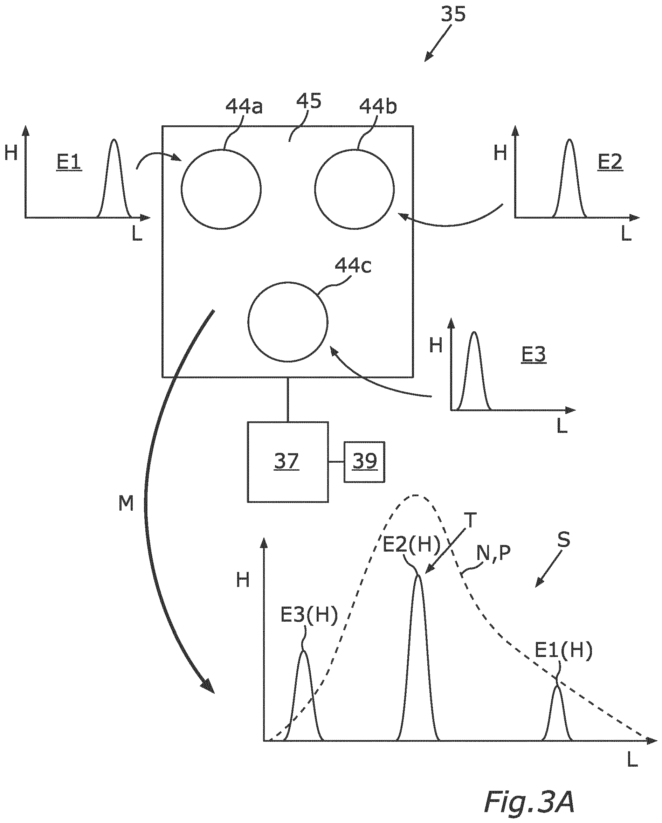

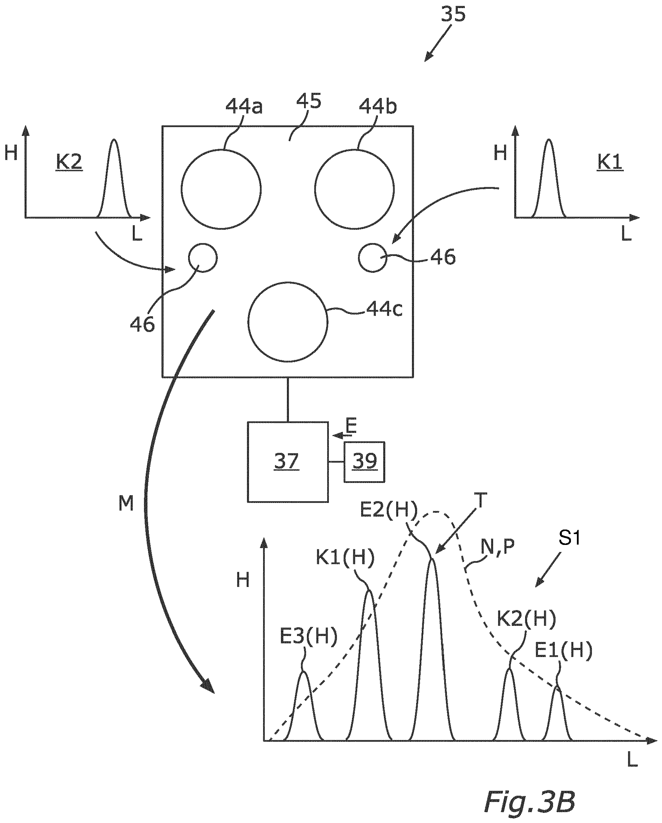

Beispielsweise können die Bildpunktelemente 35 bei einer solchen Hintergrund-Wiedergabeeinrichtung 15 als individuell ansteuerbare Lichtquellen, insbesondere jedoch als individuell ansteuerbare Lichtquelleneinheiten 45 ausgebildet sein, wobei jede einer solchen Lichtquelleneinheit 45 mehrere, insbesondere drei, Lichtquellen 44a, 44b und 44c umfassen kann (vgl. auch Fig. 3A und 3B). Eine solche Lichtquelleneinheit 45 kann zudem einen Farbmischer umfassen, um durch jeweiliges individuelles Ansteuern der Lichtquellen 44a, 44b und 44c der Lichtquelleneinheit 45 eine jeweilige von dem Bildpunktelement 35 emittierte Farbe und/oder Helligkeit einstellen zu können, wie nachstehend noch näher erläutert ist. Insbesondere können die Lichtquellen 44a, 44b und 44c als LED oder als organische Leuchtdioden bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden. Insofern umfasst die aktive Beleuchtungseinrichtung 31 bei der gezeigten Ausführungsform mehrere Paneele 41.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Um dies zu ermöglichen, kann die Hintergrund-Wiedergabeeinrichtung 15 insbesondere eine Breite von mindestens 5 Meter und eine Höhe von mindestens 2 Meter aufweisen. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann. Der virtuelle Hintergrund 21 bzw. dessen Darstellung 19 kann somit von der Kamera 23 während einer Aufnahme in dem virtuellen Bildaufnahmestudio unmittelbar abgebildet werden, so dass der von der Kamera 23 erzeugten Abbildung nicht nachträglich ein virtueller Hintergrund 21, wie bei einer Green-Screen-Aufnahme, hinzugefügt werden muss.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten. Dadurch kann die Hintergrund-Wiedergabeeinrichtung 15 beispielsweise eine Beleuchtungseinrichtung 105, insbesondere einen Scheinwerfer 107, unterstützen, welcher zur Beleuchtung des realen Motivs 17 Licht mit einem Beleuchtungs-Emissionsspektrum A generiert. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf, welche mit einem Speicher 39 verbunden ist. In dem Speicher 39 kann insbesondere ein Modell des virtuellen Hintergrunds 21 gespeichert sein, so dass die Steuereinrichtung den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren.

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen 73 erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit zu steuern. Insbesondere können die Wiedergabeeinrichtung 49 und die Eingabeeinrichtung 51 von einem Touchscreen gebildet sein, über welchen dem Benutzer sowohl Informationen angezeigt als auch Benutzereingaben empfangen werden können.

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen aufweisen, die in mehreren Zeilen und Spalten angeordnet sein können. Ferner weist die Kamera 23 eine Ausleseschaltung 97 auf, welche dazu ausgebildet ist, die Signale der jeweiligen Sensorelemente auszulesen, aufzubereiten, zu digitalisieren und an bzw. über einen Signalausgang 99 auszugeben. Dazu kann die Ausleseschaltung 97 insbesondere Verstärker, Multiplexer, Analog-DigitalWandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann.

Ferner weisen die Hintergrund-Wiedergabeeinrichtung 15 eine Schnittstelle 103 und die Kamera 23 eine Schnittstelle 101 auf, über welche insbesondere Informationen I von der Kamera 23 an die Hintergrund-Wiedergabeeinrichtung 15 übermittelbar sein können. Insbesondere kann die Steuereinrichtung 37 der Hintergrund-Wiedergabeeinrichtung 15 dazu ausgebildet sein, die aktive Beleuchtungseinrichtung 31 in Abhängigkeit von einer von der Kamera 23 empfangenen Information I zu steuern.

Wie bereits erwähnt, umfasst jedes der Vielzahl von Bildpunktelementen 35 bei der gezeigten Ausführungsform der Hintergrund-Wiedergabeeinrichtung 15 eine jeweilige Lichtquelleneinheit 45, wobei eine solche Lichtquelleneinheit 45 schematisch in Fig. 3A veranschaulicht ist.

Die Lichtquelleneinheit 45 weist eine erste Lichtquelle 44a, eine zweite Lichtquelle 44b und eine dritte Lichtquelle 44c auf. Die erste Lichtquelle 44a ist dazu ausgebildet, ein erstes Emissionsspektrum E1 zu erzeugen, die zweite Lichtquelle 44b ist dazu ausgebildet, ein zweites Emissionsspektrum E2 zu erzeugen und die dritte Lichtquelle 44c ist dazu ausgebildet, ein drittes Emissionsspektrum E3 zu erzeugen, wobei sich die Emissionsspektren E1, E2 und E3 voneinander unterscheiden. In Fig. 3A sind die Emissionsspektren E1, E2 und E3 beispielhaft dargestellt, wobei die Abhängigkeit einer Helligkeit H bzw. Intensität des von der jeweiligen Lichtquelle 44a, 44b bzw. 44c erzeugten Lichts von einer emittierten Wellenlänge L gezeigt ist.

Wie aus Fig. 3A ersichtlich wird, sind die Lichtquellen 44a, 44b und 44c insbesondere dazu ausgebildet, schmalbandige Emissionsspektren E1, E2 und E3 zu erzeugen. Insbesondere kann es sich bei den Lichtquellen 44a, 44b und 44c um jeweilige Leuchtdioden handeln. Ferner kann die erste Lichtquelle 44a dazu ausgebildet sein, rotes Licht zu emittieren, während die zweite Lichtquelle 44b dazu ausgebildet sein kann, grünes Licht zu emittieren. Die dritte Lichtquelle 44c kann insbesondere dazu ausgebildet sein, blaues Licht zu emittieren. Insofern kann die Lichtquelleneinheit 45 insbesondere als eine sogenannte Rot-Grün-Blau(RGB-)-Einheit ausgebildet sein.

Indem die Lichtquelleneinheit 45 die drei Lichtquellen 44a, 44b und 44c mit sich voneinander unterscheidenden Emissionsspektren E1, E2 und E3 aufweist, kann die Steuereinrichtung 37 dazu ausgebildet sein, durch Mischen M der Emissionsspektren E1, E2 und E3 ein Lichtquelleneinheit-Emissionsspektrum S zu generieren. Dazu können die Lichtquellen 44a, 44b und 44c insbesondere mittels der Steuereinrichtung 37 individuell ansteuerbar sein, um eine jeweilige Helligkeit H und/oder Intensität der Lichtquellen 44a, 44b und 44c einzustellen und dadurch einen jeweiligen Beitrag des ersten Emissionsspektrums E1, des zweiten Emissionsspektrums E2 und des dritten Emissionsspektrums E3 zu dem Lichtquelleneinheit-Emissionsspektrum S zu bestimmen.

Insbesondere können die erste Lichtquelle 44a und die dritte Lichtquelle 44c ferner dazu ausgebildet sein, Licht in einem jeweiligen Endbereich des sichtbaren Lichtspektrums zu generieren. Die erste Lichtquelle 44a kann beispielsweise dazu ausgebildet sein, rotes Licht in einem Endbereich des sichtbaren Lichts zu emittieren und die dritte Lichtquelle 44c kann dazu ausgebildet sein, blaues Licht in einem Endbereich des sichtbaren Lichts zu emittieren. Insbesondere können die Wellenlängen L, bei welchen die Emissionsspektren E1 und E2 ihr jeweiliges Maximum erreichen, in einem solchen Endbereich liegen. Eine solche Emission von Licht in Endbereichen des sichtbaren Lichts kann es insbesondere ermöglichen, mittels der Lichtquelleneinheit 45 Licht in einem großen (RGB-) Farbraum zu emittieren. Insbesondere kann somit an jedem Bildpunktelement 35 der Hintergrund-Wiedergabeeinrichtung 15 ein großer Farbraum zur Verfügung stehen und es können nahezu beliebige Farben, welche in der Darstellung 19 des virtuellen Hintergrunds 21 an einem dem jeweiligen Bildpunktelement 35 zugewiesenen Bildpunkt existieren, wiedergegeben werden.

Wie jedoch aus dem unteren Teil der Fig. 3A hervorgeht, unterscheidet sich das aus den schmalbandigen Emissionsspektren E1, E2 und E3 zusammengesetzte Lichtquelleneinheit-Emissionsspektrum S von einem Emissionsspektrum N natürlichen Lichts, welches insbesondere kontinuierlich verläuft, während das aus den Emissionsspektren E1, E2 und E3 zusammengesetzte Lichtquelleneinheit-Emissionsspektrum S Lücken und/oder Senken zwischen den jeweiligen Emissionsspektren E1, E2 und E3 und sprunghafte Übergängen zwischen den jeweiligen Anteilen der Emissionsspektren E1, E2 und E3 der Lichtquellen 44a, 44b und 44c aufweist. Insbesondere kann das Emissionsspektrum N natürlichen Lichts hingegen durch ein Schwarzkörperspektrum P beschrieben werden.

Dieser Unterschied zwischen dem Lichtquelleneinheit-Emissionsspektrum S und dem Emissionsspektrum N natürlichen Lichts kann jedoch dazu führen, dass das von der Lichteinheit 45 emittierte Licht von einem realen Motiv 17, welches sich vor oder unter der Hintergrund-Wiedergabeeinrichtung 15 befindet, in Abhängigkeit von etwaigen spektralen Reflexionseigenschaften des realen Motivs 17 anders emittiert wird, als dies bei natürlichen Lichtverhältnissen in einem dem virtuellen Hintergrund 21 entsprechenden realen Hintergrund, beispielsweise einer Landschaft, der Fall wäre. Insbesondere kann dies auch dazu führen, dass Farben des realen Motivs 17, etwa einer Bekleidung eines Schauspielers, in der von der Kamera 23 erzeugten Abbildung anders als bei einer Reflexion natürlichen Lichts von dem realen Motiv 17 erscheinen. Die entsprechend mangelhafte Farbwiedergabequalität einer solchen Hintergrund-Wiedergabeeinrichtung 15 bzw. einer Lichtelementeinheit 45 kann daher eine gegebenenfalls abschnittsweise durchzuführenden Nachbearbeitung in den von der Kamera 23 erzeugten Abbildung erfordern, um einen solchen unnatürlichen Eindruck der in dem virtuellen Bildaufnahmestudio 13 erzeugten Abbildungen zu korrigieren. Zudem kann es bei bestimmten Aufnahmen vorgesehen sein, dass reale Motiv 17 in dem virtuellen Bildaufnahmestudio 13 zusätzlich zu der Hintergrund-Wiedergabeeinrichtung 15 auch durch Scheinwerfer zu beleuchten, die jedoch ein für die Beleuchtung optimiertes Emissionsspektrum mit hoher Farbwiedergabequalität aufweisen können, welches insbesondere natürlichem Licht nachempfunden sein kann. In solchen Mischlichtsituationen kann die Lichtreflexion von dem realen Motiv 17 insbesondere sogar abschnittsweise in Abhängigkeit davon variieren, ob der jeweilige Abschnitt vornehmlich von der Hintergrund-Wiedergabeeinrichtung 15 oder dem Scheinwerfer beleuchtet wird. Derartige abschnittsweise Effekte in der von der Kamera 23 erzeugten Abbildung können jedoch häufig nicht mit vertretbarem Aufwand im Zuge einer Nachbearbeitung und/oder Post-Production korrigiert werden.

Um diesem Problem zu begegnen, sind der anhand von Fig. 3B veranschaulichten Lichtquelleneinheit 45 beispielhaft zwei Korrekturlichtquellen 46 zugeordnet, wobei die Korrekturlichtquellen 46 dazu ausgebildet sind, ein jeweiliges Korrekturlichtemissionsspektrum K1 bzw. K2 zu emittieren. Die Korrekturlichtemissionsspektren K1 und K2 unterscheiden sich in dem gezeigten Ausführungsbeispiel sowohl voneinander als auch von den Emissionsspektren E1, E2 und E3 der Lichtquellen 44a, 44b und 44c.

Die zusätzliche Anordnung von Korrekturlichtquellen 46 ermöglicht es der Steuereinrichtung 37, durch Ansteuern dieser Korrekturlichtquellen 46 das Lichtelementeinheit-Emissionsspektrum S zu einem korrigierten Emissionsspektrum S1 anzupassen, welches einem vorgegebenen oder vorgebbaren Emissionsspektrum N und insbesondere dem Emissionsspektrum N natürlichen Lichts und/oder dem Schwarzkörper-Spektrum P angenähert ist. Insbesondere kann dazu das Korrekturlichtemissionsspektrum K1 Licht mit Wellenlängen L zwischen dem zweiten Emissionsspektrum E2 und dem dritten Emissionsspektrum E3 emittieren, während das zweite Korrekturlichtemissionsspektrum K2 hinsichtlich der emittierten Wellenlängen L zwischen dem ersten Emissionsspektrum E1 und dem zweiten Emissionsspektrum E2 der Lichtquellen 44a und 44b angeordnet sein kann.

Auch die Korrekturlichtquellen 46 können insbesondere als Leuchtdioden ausgebildet sein und entsprechend schmalbandige Korrekturlichtemissionsspektren K1 und K2 emittieren. Jedoch kann das korrigierte Emissionsspektrum S1 gegenüber dem Lichtelementeinheit-Emissionsspektrum S durch das Ansteuern der Korrekturlichtquellen 46, wobei wiederum insbesondere eine Intensität und/oder Helligkeit H der Korrekturlichtquellen 46 eingestellt werden kann, zumindest verstetigt und dem Emissionsspektrum N natürlichen Lichts dadurch angenähert werden. Insbesondere kann der starke Anstieg des Emissionsspektrums N natürlichen Lichts bei kleinen Wellenlängen L und der langsame Auslauf hin zu großen Wellenlängen L durch entsprechendes Ansteuern der Korrekturlichtquellen 46 in dem korrigierten Emissionsspektrum S1 nachgebildet werden.

Zudem ist die Steuereinrichtung 37 dazu ausgebildet, die Korrekturlichtquellen 46 derart anzusteuern, dass eine Wellenlänge L eines Maximums T des korrigierten Emissionsspektrums S1 einer Wellenlänge L eines Maximums T des Lichtelementeinheit-Emissionsspektrums S entspricht. Die Steuereinheit 37 kann somit dazu ausgebildet sein, das korrigierte Emissionsspektrum S1 dem Emissionsspektrum N des natürlichen Lichts anzunähern, ohne jedoch die an der Lichtquelleneinheit 45 eingestellte Farbe merklich zu verändern. Insbesondere kann dadurch auch der große, von der Lichtquelleneinheit 45 generierbare Farbraum erhalten bleiben, wobei jedoch durch das Verstetigen des Lichtelementeinheit-Emissionsspektrums S zum Annähern an das Emissionsspektrum N natürlichen Lichts die Farbwiedergabequalität der Hintergrund-Wiedergabeeinrichtung erhöht werden kann.

Darüber hinaus kann die Steuereinrichtung 37 auch dazu ausgebildet sein, die Korrekturlichtquellen 46 derart anzusteuern, dass das Maximum T des korrigierten Emissionsspektrums S1 dem Maximum T des Lichtelementeinheit-Emissionsspektrums S. Auch die Helligkeit H des Lichtelementeinheit-Emissionsspektrums S kann somit durch das Anpassen im Wesentlichen unverändert bleiben, so dass die Darstellung 19 trotz des Anpassens der Lichtelementeinheit-Emissionsspektren S im Wesentlichen unverändert an der Hintergrund-Wiedergabeeinrichtung 15 wiedergegeben werden kann.

Um eine entsprechende Ansteuerung der Korrekturlichtquellen 46 zu ermöglichen, können in dem Speicher 39 beispielsweise Einstellanweisungen E für das Ansteuern der Korrekturlichtquellen 46 in Abhängigkeit von einem Ansteuern der Lichtquellen 44a, 44b und 44c in einer Nachschlagetabelle gespeichert sein. Beispielsweise kann in einer solchen Nachschlagetabelle für eine bestimmte an der Lichtelementeinheit 45 eingestellten Farbe bzw. einen Farbwert eine jeweilige Einstellanweisung E zum Ansteuern der Korrekturlichtquellen 46 gespeichert sein, um das Lichtelementeinheit-Emissionsspektrum S durch entsprechendes Ansteuern der Korrekturlichtquellen 46 dem Emissionsspektrum N natürlichen Lichts anzunähern.

In dem Speicher 39 können jedoch auch insbesondere Parameter und/oder Berechnungsanweisungen gespeichert sein, wobei die Steuereinrichtung 37 dazu ausgebildet sein kann, das Lichtquelleneinheit-Emissionsspektrum S und/oder das korrigierte Emissionsspektrum S1 anhand der Berechnungsanweisungen und/oder Parameter zu berechnen. Zudem können beispielsweise die Emissionsspektren E1, E2, E3 und/oder die Korrekturlichtemissionsspektren K1 und K2 in dem Speicher 39 gespeichert sein, wobei die Steuereinrichtung 37 dazu ausgebildet sein kann, das Lichtelementeinheit-Emissionsspektrum S und/oder das korrigierte Emissionsspektrum S1 in Abhängigkeit von jeweiligen Ansteuerungen der Lichtquellen 44a, 44b und 44c und/oder der Korrekturlichtquellen 46 zu ermitteln.

Zudem kann die Steuereinrichtung 37 beispielsweise dazu ausgebildet sein, das korrigierte Emissionsspektrum S1 durch ein Näherungsverfahren zu bestimmen, indem insbesondere jeweilige erwartete korrigierte Emissionsspektren S1 bei bestimmten Ansteuerungen der Korrekturlichtquellen 46 ermittelt und eine Abweichung zu dem Emissionsspektrum N natürlichen Lichts bestimmt wird. Die jeweiligen erforderlichen Einstellanweisungen E für die Korrekturlichtquellen 46 können sodann als diejenigen Einstellanweisungen E ermittelt werden, für welche die Abweichung zwischen dem korrigierten Emissionsspektrum S1 und dem Emissionsspektrum N natürlichen Lichts minimiert ist.

Insbesondere kann es vorgesehen sein, dass jedem Bildpunktelement 35 und/oder jeder Lichtquelleneinheit 45 der Hintergrund-Wiedergabeeinrichtung 15 zumindest eine jeweilige Korrekturlichtquelle 46 zugeordnet ist. Ferner kann es vorgesehen sein, dass einer oder jeder Lichtquelleneinheit 45 insbesondere mehrere Korrekturlichtquellen 46, insbesondere zwei oder mehr als zwei Korrekturlichtquellen, zugeordnet sind, um beispielsweise die Verstetigung des korrigierten Emissionsspektrums S1 und dessen Annäherung an das Emissionsspektrum N natürlichen Lichts noch zu erweitern. Es kann jedoch auch vorgesehen sein, dass lediglich einigen Bildpunktelementen 35 oder Lichtquelleneinheiten 45 eine oder mehrere Korrekturlichtquellen 46 zugeordnet sind.

Ferner wird aus Fig. 3B ersichtlich, dass die Korrekturlichtquellen 46 in das von den Bildpunktelementen 35 gebildete regelmäßige Raster 55 eingefügt werden können. Insofern können beispielsweise bestehende Hintergrund-Wiedergabeeinrichtungen 15 durch Anbringen derartiger Korrekturlichtquellen 46 und entsprechendes Anpassen einer Steuereinrichtung 37 nachgerüstet werden, um eine verbesserte Farbwiedergabequalität zu erreichen. Um ein solches Einfügen zu erleichtern, sind die Korrekturlichtquellen 46 insbesondere kleiner als die Lichtquellen 44a, 44b und 44c ausgebildet. Eine komplette Neustrukturierung der Hintergrund-Wiedergabeeinrichtung 15 und/oder der Paneele 41 ist somit nicht zwangsläufig erforderlich.

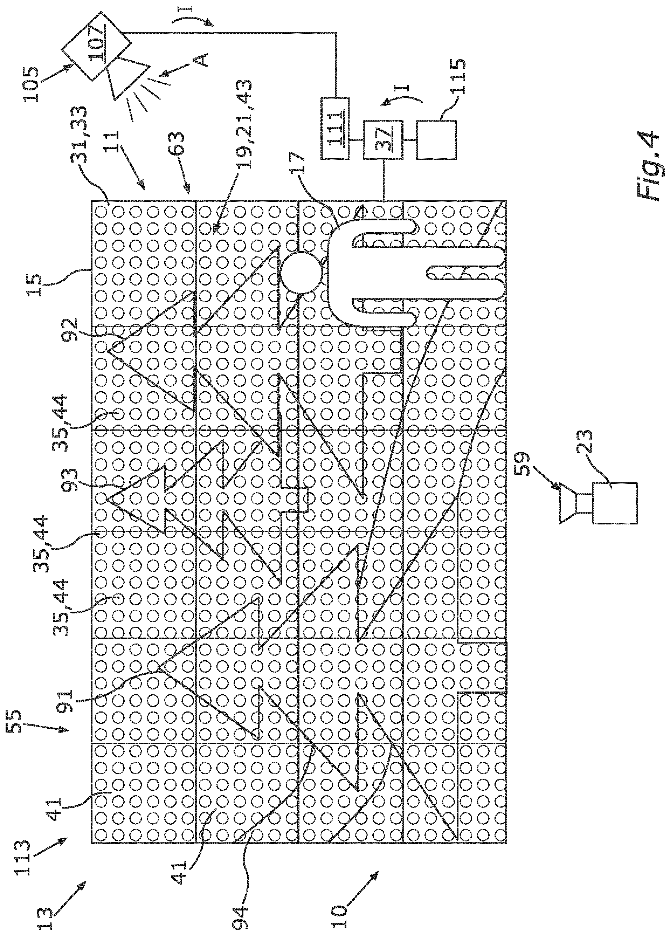

Alternativ zu einer Annäherung des korrigierten Emissionsspektrum S1 an ein, insbesondere vorgegebenes, Emissionsspektrum N natürlichen Lichts ist es bei der in Fig. 4 gezeigten Ausführungsform vorgesehen, dass die Steuereinrichtung 37 dazu ausgebildet ist, das korrigierte Emissionsspektrum S1 dem von der Beleuchtungseinrichtung 105 generierten Beleuchtungs-Emissionsspektrum A anzunähern. Dazu weist die Hintergrund-Wiedergabeeinrichtung 15 einen mit der Beleuchtungseinrichtung 105 verbundenen Signaleingang 111 auf, so dass die Hintergrund-Wiedergabeeinrichtung 15 mit der Beleuchtungseinrichtung 105 ein Hintergrundwiedergabesystem 109 bildet. Der Signaleingang 111 ist dazu ausgebildet, eine Information I über das Beleuchtungs-Emissionsspektrum A von der Beleuchtungseinrichtung 105 zu empfangen und an die Steuereinrichtung 37 zu übermitteln, wobei die Information I beispielsweise das Beleuchtungs-Emissionsspektrum A beschreibende Metadaten umfassen kann. Anhand dieser Information I, die auch das Beleuchtungs-Emissionsspektrum A selbst, beispielsweise als ein Histogramm, umfassen kann, kann die Steuereinrichtung 37 sodann die Ansteuerung der Korrekturlichtquellen 46 ermitteln, um das korrigierte Emissionsspektrum S1 dem insofern von der Beleuchtungseinrichtung 105 vorgebbaren Beleuchtungs-Emissionsspektrum A anzunähern.

Insbesondere kann durch eine solche Annäherung des korrigierten Emissionsspektrums S1 an das Beleuchtungs-Emissionsspektrum A erreicht werden, dass das in dem virtuellen Bildaufnahmestudio 13 zur Beleuchtung des realen Motivs 17 dienende Licht der Hintergrund-Wiedergabeeinrichtung 15 und der Beleuchtungseinrichtung 105 annähernd übereinstimmende spektrale Eigenschaften aufweist. Spektrale Verschiebungen des von dem realen Motiv 17 reflektierten Lichts in Abhängigkeit davon, ob das reale Motiv 17 von der Hintergrund-Wiedergabeeinrichtung 15 oder der Beleuchtungseinrichtung 105 beleuchtet wird, können dadurch vermieden werden.

Die Steuereinrichtung 37 kann zudem dazu ausgebildet sein, das korrigierte Emissionsspektrum S1 einem sich während einer Aufnahme verändernden Beleuchtungs-Emissionsspektrum A anzunähern oder nachzuführen, wozu entsprechende Informationen I über das Beleuchtungs-Emissionsspektrum A während der Aufnahme bereitgestellt werden können. Ferner ist der Signaleingang 111 bei der gezeigten Ausführungsform mit einer Messeinrichtung 115, beispielsweise einem Spektrometer, verbunden, welche dazu ausgebildet ist, das Beleuchtungs-Emissionsspektrum A zu ermitteln und eine entsprechende Information I an den Signaleingang 111 zu übermitteln, so dass die Steuereinrichtung 37 die erforderliche Anpassung auch oder lediglich anhand dieser Information I vornehmen kann.

Grundsätzlich kann auch die Beleuchtungseinrichtung 105 dazu ausgebildet sein, Licht mit einem möglichst hohen Farbwiedergabeindex und insofern ein dem Emissionsspektrum N natürlichen Lichts angenähertes Beleuchtungs-Emissionsspektrum A zu generieren, so dass zum Nachbilden des Beleuchtungs-Emissionsspektrums A insbesondere die vorstehend erläuterten Maßnahmen zum Nachbilden des Emissionsspektrums N natürlichen Lichts, insbesondere eine Verstetigung des Lichtquelleneinheit-Emissionsspektrums S, erfolgen können.

### Bezugszeichenliste

- 1: Bildsensor
- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 21: virtueller Hintergrund
- 23: Kamera
- 25: Steuereinrichtung
- 31: Beleuchtungseinrichtung
- 33: LED-Wand
- 35: Bildpunktelement
- 37: Steuereinrichtung
- 39: Speicher
- 41: Paneel
- 43: dreidimensionale Szene
- 44a: erste Lichtquelle
- 44a: zweite Lichtquelle
- 44a: dritte Lichtquelle
- 45: Lichtquelleneinheit
- 46: Korrekturlichtquelle
- 49: Wiedergabeeinrichtung
- 51: Eingabeeinrichtung
- 53: Kamerakörper
- 55: Raster
- 59: Kameraobjektiv, Wechselobjektiv
- 79: Sucher
- 81: Objektivring
- 83: Objektiv-Stellmotor
- 85: Objektivring-Antriebseinheit
- 87: Haltestange
- 91: erstes Objekt
- 92: zweites Objekt
- 93: drittes Objekt
- 94: viertes Objekt
- 97: Ausleseschaltung
- 99: Signalausgang
- 101: Schnittstelle
- 103: Schnittstelle
- 105: Beleuchtungseinrichtung
- 107: Scheinwerfer
- 109: Hintergrundwiedergabesystem
- 111: Signaleingang
- 113: Hintergrundwiedergabesystem
- 115: Messeinrichtung
- A: Beleuchtungs-Emissionsspektrum
- B: Bilddatensatz
- E1: erstes Emissionsspektrum
- E2: zweites Emissionsspektrum
- E3: drittes Emissionsspektrum
- H: Helligkeit
- I: Information
- L: Wellenlänge
- K1, K2: Korrekturlichtemissionsspektrum
- M: Mischen
- N: Emissionsspektrum natürlichen Lichts
- P: Schwarzkörper-Spektrum
- S: Lichtquelleneinheit-Emissionsspektrum
- S1: korrigiertes Emissionsspektrum
- T: Maximum

## Patentansprüche

1. Hintergrund-Wiedergabeeinrichtung (15) für ein virtuelles Bildaufnahmestudio (13), welche dazu ausgebildet ist, für eine Aufnahme mittels einer zugeordneten Kamera (23) hinter oder über einem realen Motiv (17) eine Darstellung (19) eines virtuellen Hintergrunds (21) wiederzugeben,
wobei die Hintergrund-Wiedergabeeinrichtung (15) zumindest ein Paneel (41) mit einer Vielzahl von Bildpunktelementen (35) in einer zumindest zweidimensionalen Anordnung aufweist,
wobei jedes der Vielzahl von Bildpunktelementen (35) eine jeweilige Lichtquelleneinheit (45) aufweist, welche eine erste Lichtquelle (44a) zum Erzeugen eines ersten Emissionsspektrums (E1), eine zweite Lichtquelle (44b) zum Erzeugen eines zweiten Emissionsspektrums (E2) und eine dritte Lichtquelle (44c) zum Erzeugen eines dritten Emissionsspektrums (E3) umfasst,
wobei die Hintergrund-Wiedergabeeinrichtung (15) eine Steuereinrichtung (37) aufweist, welche dazu ausgebildet ist, die Lichtquellen (44a, 44b, 44c) der Lichtquelleneinheiten (45) individuell anzusteuern und durch Mischen (M) der jeweiligen ersten Emissionsspektren (E1), zweiten Emissionsspektren (E2) und dritten Emissionsspektren (E3) ein jeweiliges Lichtquelleneinheit-Emissionsspektrum (S) zu generieren,
**dadurch gekennzeichnet, dass**
das Paneel (41) zudem eine Vielzahl von Korrekturlichtquellen (46) aufweist,
wobei die Steuereinrichtung (37) dazu ausgebildet ist, das jeweilige Lichtquelleneinheit-Emissionsspektrum (S) durch Ansteuern der Korrekturlichtquellen (46) zu einem korrigierten Emissionsspektrum (S1) anzupassen, welches einem vorgegebenen oder vorgebbaren Emissionsspektrum (N) angenähert ist.

2. Hintergrund-Wiedergabeeinrichtung (15) nach Anspruch 1,
wobei die Hintergrund-Wiedergabeeinrichtung (15) als eine LED-Wand (33) ausgebildet ist, wobei die Bildpunktelemente (35) als Leuchtdiodeneinheiten und die Lichtquellen (44a, 44b, 44c) und/oder die Korrekturlichtquellen (46) als Leuchtdioden ausgebildet sind;
und/oder
wobei die Hintergrund-Wiedergabeeinrichtung (15) gewölbt ist;
und/oder
wobei die Hintergrund-Wiedergabeeinrichtung (15) mehrere Paneele (41) umfasst, wobei jedes der mehreren Paneele (41) rechteckig und randlos ausgebildet ist, und wobei die mehreren Paneele (41) in einer zumindest zweidimensionalen Matrix angeordnet sind;
und/oder
wobei die Hintergrund-Wiedergabeeinrichtung (15) sich über eine Breite von mindestens 5 m und eine Höhe von mindestens 2 m erstreckt;
und/oder
wobei der virtuelle Hintergrund eine dreidimensionale Szene (43) repräsentiert.

3. Hintergrund-Wiedergabeeinrichtung (15) nach einem der vorhergehenden Ansprüche, wobei die Steuereinrichtung (37) dazu ausgebildet ist, das Lichtquelleneinheit-Emissionsspektrum (S) derart anzupassen, dass ein Maximum (T) des korrigierten Emissionsspektrums (S1) einem Maximum (T) des Lichtquelleneinheit-Emissionsspektrums (S) entspricht und/oder dass eine einem Maximum (T) des korrigierten Emissionsspektrums (S1) zugeordnete Wellenlänge (L) einer einem Maximum (T) des Lichtquelleneinheit-Emissionsspektrums (S) zugeordneten Wellenlänge (L) entspricht.

4. Hintergrund-Wiedergabeeinrichtung (15) nach einem der vorhergehenden Ansprüche, wobei das erste Lichtquelle (44a) dazu ausgebildet ist, rotes Licht zu emittieren, wobei das zweite Lichtquelle (44b) dazu ausgebildet ist, grünes Licht zu emittieren, und wobei das dritte Lichtquelle (44c) dazu ausgebildet ist, blaues Licht zu emittieren;
und/oder
wobei das erste Emissionsspektrum (E1), das zweite Emissionsspektrum (E2) und das dritte Emissionsspektrum (E3) schmalbandige Emissionsspektren um ein jeweiliges Emissionsmaximum bilden;
und/oder
wobei jeder der Lichtquelleneinheiten (45) zumindest eine jeweilige Korrekturlichtquelle (46) zugeordnet ist.

5. Hintergrund-Wiedergabeeinrichtung (15) nach einem der vorhergehenden Ansprüche, wobei die Steuereinrichtung (37) dazu ausgebildet ist, die Lichtquelleneinheit-Emissionsspektren (S) durch Ansteuern der Korrekturlichtquellen (46) einem Schwarzkörper-Spektrum (P) anzunähern.

6. Hintergrund-Wiedergabeeinrichtung (15) nach einem der vorhergehenden Ansprüche, wobei die Steuereinrichtung (37) dazu ausgebildet ist, zum Generieren eines Lichtquelleneinheit-Emissionsspektrums (S) Intensitäten und/oder Helligkeiten (H) der jeweiligen ersten Lichtquelle (44a), zweiten Lichtquelle (44b) und dritten Lichtquelle (44c) anzupassen;
und/oder
wobei die erste Steuereinrichtung (37) dazu ausgebildet ist, die Lichtquelleneinheit-Emissionsspektren durch Anpassen einer Intensität und/oder Helligkeit (H) der Korrekturlichtquellen (46) anzupassen.

7. Hintergrund-Wiedergabeeinrichtung (15) nach einem der vorhergehenden Ansprüche, wobei die Steuereinrichtung (37) dazu ausgebildet ist, Einstellanweisungen (E) für die Ansteuerung der Korrekturlichtquellen (46) in Abhängigkeit von der Ansteuerung der Lichtquelleneinheiten (45) zu ermitteln.

8. Hintergrund-Wiedergabeeinrichtung (15) nach Anspruch 7,
wobei die Steuereinrichtung (37) mit einem Speicher (39) verbunden und dazu ausgebildet ist, die Einstellanweisungen (E) in Abhängigkeit von der Ansteuerung der Lichtquelleneinheiten (45) in einer in dem Speicher (39) gespeicherten Nachschlagetabelle nachzuschlagen;
und/oder
wobei die Steuereinrichtung (37) dazu ausgebildet ist, die Lichtquelleneinheit-Emissionsspektren (S) in Abhängigkeit von der Ansteuerung der jeweiligen Lichtquellen (44a, 44b, 44c) und/oder das korrigierte Emissionsspektrum (S1) in Abhängigkeit von der Ansteuerung der Korrekturlichtquellen (46) zu ermitteln;
und/oder
wobei die Steuereinrichtung (37) mit einem Speicher (39) verbunden ist, in welchem das erste Emissionsspektrum (E1), das zweite Emissionsspektrum (E2) und das dritte Emissionsspektrum (E3) und/oder zumindest ein Emissionsspektrum (K1, K2) der Korrekturlichtquellen (46) gespeichert sind/ist.

9. Hintergrund-Wiedergabeeinrichtung (15) nach Anspruch 7 oder 8,
wobei die Steuereinrichtung (37) dazu ausgebildet ist, das korrigierte Emissionsspektrum (S1) durch Überlagern der Emissionsspektren (E1, E2, E3) der Lichtquellen (44a, 44b, 44c) und der Korrekturlichtquellen (46) zu ermitteln.

10. Hintergrund-Wiedergabeeinrichtung (15) nach einem der Ansprüche 7 bis 9,
wobei die Steuereinrichtung (37) dazu ausgebildet ist, die Einstellanweisungen (E) durch ein Näherungsverfahren zu bestimmen;
wobei die Steuereinrichtung (37) vorzugsweise dazu ausgebildet ist, ein bei jeweiligen Einstellanweisungen (E) zu erwartenden korrigiertes Emissionsspektrums (S1) mit dem vorgegebenen oder vorgebbaren Emissionsspektrum (N) zu vergleichen und eine Abweichung zwischen dem zu erwartenden korrigierten Emissionsspektrum (S1) und dem vorgegebenen oder vorgebbaren Emissionsspektrum (N) zu bestimmen, und wobei die Steuereinrichtung (37) dazu ausgebildet ist, die Einstellanweisungen (E) durch Minimieren der Abweichung zu ermitteln.

11. Hintergrund-Wiedergabeeinrichtung (15) nach einem der vorhergehenden Ansprüche, wobei die Hintergrund-Wiedergabeeinrichtung (15) einen Signaleingang (111) zum Empfang einer Information (I) über ein von einer Beleuchtungseinrichtung (105) des virtuellen Bildaufnahmestudios(13), insbesondere einem Scheinwerfer (107), erzeugtes Beleuchtungs-Emissionsspektrum (A) aufweist, wobei die Steuereinrichtung (37) dazu ausgebildet ist, das korrigierte Emissionsspektrum (S1) dem Beleuchtungs-Emissionsspektrum (A) anzunähern.

12. Hintergrund-Wiedergabeeinrichtung (15) nach einem der vorhergehenden Ansprüche, wobei die Lichtquelleneinheiten (45) und/oder die Lichtquellen (44a, 44b, 44c) in einem regelmäßigen Raster (55) angeordnet sind, wobei die Korrekturlichtquellen (46) zwischen mehreren der Lichtquelleneinheiten (45) und/oder Lichtquellen (44a, 44b, 44c) des regelmäßigen Rasters angeordnet sind, oder
wobei die Korrekturlichtquellen (46) anstelle einer jeweiligen Lichtquelle (44a, 44b, 44c) des regelmäßigen Rasters (55) angeordnet sind.

13. Hintergrund-Wiedergabesystem (113) mit einer Hintergrund-Wiedergabeeinrichtung (15) nach einem der vorhergehenden Ansprüche und mit einer Beleuchtungseinrichtung (105), insbesondere einem Scheinwerfer (107), welche dazu ausgebildet ist, ein Beleuchtungs-Emissionsspektrum (A) zum Beleuchten des realen Motivs (17) in dem virtuellen Bildaufnahmestudio (13) zu erzeugen,
wobei die Hintergrund-Wiedergabeeinrichtung (15) einen Signaleingang (111) zum Empfang einer Information (I) über das Beleuchtungs-Emissionsspektrum (A) aufweist, und wobei die Steuereinrichtung (37) dazu ausgebildet ist, das korrigierte Emissionsspektrum (S1) dem Beleuchtungs-Emissionsspektrum (A) anzunähern.

14. Hintergrund-Wiedergabesystem nach Anspruch 13,
wobei der Signaleingang (111) mit einer Messeinrichtung (115) zum Messen des Beleuchtungs-Emissionsspektrums (A) verbunden ist;
oder wobei der Signaleingang (111) mit der Beleuchtungseinrichtung (105) verbunden und die Beleuchtungseinrichtung (105) dazu ausgebildet ist, die Information (I) über das Beleuchtungs-Emissionsspektrum (A) an den Signaleingang (111) zu übermitteln.

15. Verfahren zum Aufnehmen eines realen Motivs (17) vor einem virtuellen Hintergrund in einem virtuellen Bildaufnahmestudio (13), mit den Schritten:
- Wiedergeben einer Darstellung (19) des virtuellen Hintergrunds (21) an einer Hintergrund-Wiedergabeeinrichtung (15) nach einem der Ansprüche 1 bis 12;
- Platzieren des realen Motivs (17) vor der Hintergrund-Wiedergabeeinrichtung (15); und
- Aufnehmen des realen Motivs (17) vor der Darstellung (19) des virtuellen Hintergrunds (21) mittels einer Kamera (23).

## Claims

1. A background display device (15) for a virtual image recording studio (13) that is configured to display, behind or above a real subject (17), a representation (19) of a virtual background (21) for a recording by an associated camera (23),
wherein the background display device (15) has at least one panel (41) having a plurality of picture elements (35) in an at least two-dimensional arrangement,
wherein each of the plurality of picture elements (35) has a respective light source unit (45) which comprises a first light source (44a) for generating a first emission spectrum (E1), a second light source (44b) for generating a second emission spectrum (E2), and a third light source (44c) for generating a third emission spectrum (E3),
wherein the background display device (15) has a control device (37) which is configured to individually control the light sources (44a, 44b, 44c) of the light source units (45) and to generate a respective light source unit emission spectrum (S) by mixing (M) the respective first emission spectra (E1), second emission spectra (E2), and third emission spectra (E3), **characterized in that**
the panel (41) furthermore has a plurality of correction light sources (46), wherein the control device (37) is configured to adapt the respective light source unit emission spectrum (S) to a corrected emission spectrum (S1), which is approximated to a predefined or predefinable emission spectrum (N), by controlling the correction light sources (46).

2. A background display device (15) according to claim 1,
wherein the background display device (15) is configured as an LED wall (33), wherein the picture elements (35) are configured as light-emitting diode units and the light sources (44a, 44b, 44c) and/or the correction light sources (46) are configured as light-emitting diodes;
and/or
wherein the background display device (15) is arched;
and/or
wherein the background display device (15) comprises a plurality of panels (41), wherein each of the plurality of panels (41) is formed as rectangular and without margins, and wherein the plurality of panels (41) are arranged in an at least two-dimensional matrix;
and/or
wherein the background display device (15) extends over a width of at least 5 m and a height of at least 2 m;
and/or
wherein the virtual background represents a three-dimensional scene (43).

3. A background display device (15) according to one of the preceding claims, wherein the control device (37) is configured to adapt the light source unit emission spectrum (S) such that a maximum (T) of the corrected emission spectrum (S1) corresponds to a maximum (T) of the light source unit emission spectrum (S) and/or such that a wavelength (L) associated with a maximum (T) of the corrected emission spectrum (S1) corresponds to a wavelength (L) associated with a maximum (T) of the light source unit emission spectrum (S).

4. A background display device (15) according to any one of the preceding claims,
wherein the first light source (44a) is configured to emit red light, wherein the second light source (44b) is configured to emit green light, and wherein the third light source (44c) is configured to emit blue light;
and/or
wherein the first emission spectrum (E1), the second emission spectrum (E2), and the third emission spectrum (E3) form narrow-band emission spectra around a respective emission maximum;
and/or
wherein each of the light source units (45) is associated with at least one respective correction light source (46).

5. A background display device (15) according to any one of the preceding claims,
wherein the control device (37) is configured to approximate the light source unit emission spectra (S) to a blackbody spectrum (P) by controlling the correction light sources (46).

6. A background display device (15) according to any one of the preceding claims,
wherein the control device (37) is configured to adapt intensities and/or brightnesses (H) of the respective first light source (44a), second light source (44b), and third light source (44c) in order to generate a light source unit emission spectrum (S);
and/or
wherein the first control device (37) is configured to adapt the light source unit emission spectra by adapting an intensity and/or a brightness (H) of the correction light sources (46).

7. A background display device (15) according to any one of the preceding claims,
wherein the control device (37) is configured to determine setting instructions (E) for the control of the correction light sources (46) in dependence on the control of the light source units (45).

8. A background display device (15) according to claim 7,
wherein the control device (37) is connected to a memory (39) and is configured to look up the setting instructions (E) in a look-up table stored in the memory (39) in dependence on the control of the light source units (45); and/or
wherein the control device (37) is configured to determine the light source unit emission spectra (S) in dependence on the control of the respective light sources (44a, 44b, 44c) and/or to determine the corrected emission spectrum (S1) in dependence on the control of the correction light sources (46);
and/or
wherein the control device (37) is connected to a memory (39) in which the first emission spectrum (E1), the second emission spectrum (E2), and the third emission spectrum (E3) and/or at least one emission spectrum (K1, K2) of the correction light sources (46) are/is stored.

9. A background display device (15) according to claim 7 or 8,
wherein the control device (37) is configured to determine the corrected emission spectrum (S1) by superposing the emission spectra (E1, E2, E3) of the light sources (44a, 44b, 44c) and the correction light sources (46).

10. A background display device (15) according to any one of the claims 7 to 9, wherein the control device (37) is configured to determine the setting instructions (E) by an approximation method;
wherein the control device (37) is preferably configured to compare a corrected emission spectrum (S1) to be expected in the case of respective setting instructions (E) with the predefined or predefinable emission spectrum (N) and to determine a deviation between the corrected emission spectrum (S1) to be expected and the predefined or predefinable emission spectrum (N), and wherein the control device (37) is configured to determine the setting instructions (E) by minimizing the deviation.

11. A background display device (15) according to any one of the preceding claims,
wherein the background display device (15) has a signal input (111) for receiving information (I) about an illumination emission spectrum (A) generated by an illumination apparatus (105) of the virtual image recording studio (13), in particular a spotlight (107), wherein the control device (37) is configured to approximate the corrected emission spectrum (S1) to the illumination emission spectrum (A).

12. A background display device (15) according to any one of the preceding claims,
wherein the light source units (45) and/or the light sources (44a, 44b, 44c) are arranged in a regular grid (55), wherein the correction light sources (46) are arranged between a plurality of the light source units (45) and/or light sources (44a, 44b, 44c) of the regular grid, or
wherein the correction light sources (46) are arranged in place of a respective light source (44a, 44b, 44c) of the regular grid (55).

13. A background display system (113) comprising a background display device (15) according to any one of the preceding claims and an illumination apparatus (105), in particular a spotlight (107), which is configured to generate an illumination emission spectrum (A) for illuminating the real subject (17) in the virtual image recording studio (13),
wherein the background display device (15) has a signal input (111) for receiving information (I) about the illumination emission spectrum (A), and wherein the control device (37) is configured to approximate the corrected emission spectrum (S1) to the illumination emission spectrum (A).

14. A background display system according to claim 13,
wherein the signal input (111) is connected to a measurement device (115) for measuring the illumination emission spectrum (A);
or wherein the signal input (111) is connected to the illumination apparatus (105) and the illumination apparatus (105) is configured to transmit the information (I) about the illumination emission spectrum (A) to the signal input (111).

15. A method of recording a real subject (17) in front of a virtual background in a virtual image recording studio (13), comprising the steps:
- displaying a representation (19) of the virtual background (21) at a background display device (15) according to any one of the claims 1 to 12;
- placing the real subject (17) in front of the background display device (15); and
- recording the real subject (17) in front of the representation (19) of the virtual background (21) by a camera (23).

## Revendications

1. Dispositif de reproduction d'arrière-plan (15) pour un studio de prise de vue virtuel (13), qui est conçu pour reproduire une représentation (19) d'un arrière-plan virtuel (21) derrière ou au-dessus d'un sujet réel (17) pour une prise de vue au moyen d'une caméra associée (23),
dans lequel
le dispositif de reproduction d'arrière-plan (15) comprend au moins un panneau (41) ayant une pluralité d'éléments de pixel (35) selon une disposition au moins bidimensionnelle,
chacun de la pluralité d'éléments de pixel (35) présente une unité de source lumineuse respective (45) comprenant une première source lumineuse (44a) pour générer un premier spectre d'émission (E1), une deuxième source lumineuse (44b) pour générer un deuxième spectre d'émission (E2) et une troisième source lumineuse (44c) pour générer un troisième spectre d'émission (E3),
le dispositif de reproduction d'arrière-plan (15) comprend un dispositif de commande (37) conçu pour commander individuellement les sources lumineuses (44a, 44b, 44c) des unités de source lumineuse (45) et pour générer un spectre d'émission d'unité de source lumineuse (S) respectif en mélangeant (M) les premiers spectres d'émission (E1), les deuxièmes spectres d'émission (E2) et les troisièmes spectres d'émission (E3) respectifs, **caractérisé en ce que**
le panneau (41) comprend en outre une pluralité de sources lumineuses de correction (46),
le dispositif de commande (37) étant conçu pour, en commandant les sources lumineuses de correction (46), adapter le spectre d'émission d'unité de source lumineuse respectif (S) pour donner un spectre d'émission corrigé (S1) qui est approché d'un spectre d'émission prédéfini ou prédéfinissable (N).

2. Dispositif de reproduction d'arrière-plan (15) selon la revendication 1, dans lequel le dispositif de reproduction d'arrière-plan (15) est conçu comme un écran de DELs (33), les éléments de pixel (35) sont conçus comme des unités de diode électroluminescente et les sources lumineuses (44a, 44b, 44c) et/ou les sources lumineuses de correction (46) sont conçues comme des diodes électroluminescentes ;
et/ou
le dispositif de reproduction d'arrière-plan (15) est bombé ;
et/ou
le dispositif de reproduction d'arrière-plan (15) comprend une pluralité de panneaux (41), chacun de la pluralité de panneaux (41) étant de forme rectangulaire et sans bord, et la pluralité de panneaux (41) sont agencés selon une matrice au moins bidimensionnelle ;
et/ou
le dispositif de reproduction d'arrière-plan (15) s'étend sur une largeur d'au moins 5 m et une hauteur d'au moins 2 m ;
et/ou
l'arrière-plan virtuel représente une scène tridimensionnelle (43).

3. Dispositif de reproduction d'arrière-plan (15) selon l'une des revendications précédentes,
dans lequel le dispositif de commande (37) est conçu pour adapter le spectre d'émission d'unité de source lumineuse (S) de telle sorte qu'un maximum (T) du spectre d'émission corrigé (S1) corresponde à un maximum (T) du spectre d'émission d'unité de source lumineuse (S) et/ou qu'une longueur d'onde (L) associée à un maximum (T) du spectre d'émission corrigé (S1) corresponde à une longueur d'onde (L) associée à un maximum (T) du spectre d'émission d'unité de source lumineuse (S).

4. Dispositif de reproduction d'arrière-plan (15) selon l'une des revendications précédentes,
dans lequel la première source lumineuse (44a) est conçue pour émettre de la lumière rouge, la deuxième source lumineuse (44b) est conçue pour émettre de la lumière verte, et la troisième source lumineuse (44c) est conçue pour émettre de la lumière bleue ;
et/ou
le premier spectre d'émission (E1), le deuxième spectre d'émission (E2) et le troisième spectre d'émission (E3) forment des spectres d'émission à bande étroite autour d'un maximum d'émission respectif ;
et/ou
au moins une source lumineuse de correction respective (46) est associée à chacune des unités de source lumineuse (45).

5. Dispositif de reproduction d'arrière-plan (15) selon l'une des revendications précédentes,
dans lequel le dispositif de commande (37) est conçu pour rapprocher les spectres d'émission d'unité de source lumineuse (S) d'un spectre de corps noir (P) en commandant les sources lumineuses de correction (46).

6. Dispositif de reproduction d'arrière-plan (15) selon l'une des revendications précédentes,
dans lequel, pour générer un spectre d'émission d'unité de source lumineuse (S), le dispositif de commande (37) est conçu pour adapter des intensités et/ou des luminosités (H) de la première source lumineuse (44a), de la deuxième source lumineuse (44b) et de la troisième source lumineuse (44c) respectives ;
et/ou
le premier dispositif de commande (37) est conçu pour adapter les spectres d'émission d'unité de source lumineuse en adaptant une intensité et/ou une luminosité (H) des sources lumineuses de correction (46).

7. Dispositif de reproduction d'arrière-plan (15) selon l'une des revendications précédentes,
dans lequel le dispositif de commande (37) est conçu pour déterminer des instructions de réglage (E) destinées à commander les sources lumineuses de correction (46) en fonction de la commande des unités de source lumineuse (45).

8. Dispositif de reproduction d'arrière-plan (15) selon la revendication 7,
dans lequel le dispositif de commande (37) est relié à une mémoire (39) et est conçu pour consulter, dans une table de consultation stockée dans la mémoire (39), les instructions de réglage (E) en fonction de la commande des unités de source lumineuse (45) ;
et/ou
le dispositif de commande (37) est conçu pour déterminer les spectres d'émission d'unité de source lumineuse (S) en fonction de la commande des sources lumineuses respectives (44a, 44b, 44c) et/ou pour déterminer le spectre d'émission corrigé (S1) en fonction de la commande des sources lumineuses de correction (46) ;
et/ou
le dispositif de commande (37) est relié à une mémoire (39) dans laquelle est/sont stocké(s) le premier spectre d'émission (E1), le deuxième spectre d'émission (E2) et le troisième spectre d'émission (E3) et/ou au moins un spectre d'émission (K1, K2) des sources lumineuses de correction (46).

9. Dispositif de reproduction d'arrière-plan (15) selon la revendication 7 ou 8, dans lequel le dispositif de commande (37) est conçu pour déterminer le spectre d'émission corrigé (S1) en superposant les spectres d'émission (E1, E2, E3) des sources lumineuses (44a, 44b, 44c) et des sources lumineuses de correction (46).

10. Dispositif de reproduction d'arrière-plan (15) selon l'une des revendications 7 à 9,
dans lequel le dispositif de commande (37) est conçu pour déterminer les instructions de réglage (E) par un procédé d'approximation ;
le dispositif de commande (37) est de préférence conçu pour comparer un spectre d'émission corrigé (S1), attendu pour des instructions de réglage (E) respectives, avec le spectre d'émission (N) prédéfini ou prédéfinissable et pour définir un écart entre le spectre d'émission corrigé (S1) attendu et le spectre d'émission (N) prédéfini ou prédéfinissable, et le dispositif de commande (37) est conçu pour déterminer les instructions de réglage (E) en minimisant l'écart.

11. Dispositif de reproduction d'arrière-plan (15) selon l'une des revendications précédentes,
dans lequel le dispositif de reproduction d'arrière-plan (15) comprend une entrée de signal (111) pour recevoir une information (I) relative à un spectre d'émission d'éclairage (A) généré par un dispositif d'éclairage (105) du studio de prise de vue virtuel (13), en particulier par un projecteur (107), le dispositif de commande (37) étant conçu pour rapprocher le spectre d'émission corrigé (S1) du spectre d'émission d'éclairage (A).

12. Dispositif de reproduction d'arrière-plan (15) selon l'une des revendications précédentes,
dans lequel les unités de source lumineuse (45) et/ou les sources lumineuses (44a, 44b, 44c) sont disposées selon une trame régulière (55), les sources lumineuses de correction (46) sont disposées entre plusieurs des unités de source lumineuse (45) et/ou des sources lumineuses (44a, 44b, 44c) de la trame régulière, ou
les sources lumineuses de correction (46) sont disposées à la place d'une source lumineuse respective (44a, 44b, 44c) de la trame régulière (55).

13. Système de reproduction d'arrière-plan (113) comprenant un dispositif de reproduction d'arrière-plan (15) selon l'une des revendications précédentes et comprenant un dispositif d'éclairage (105), en particulier un projecteur (107), conçu pour générer un spectre d'émission d'éclairage (A) destiné à éclairer le sujet réel (17) dans le studio de prise de vue virtuel (13),
dans lequel le dispositif de reproduction d'arrière-plan (15) comprend une entrée de signal (111) pour recevoir une information (I) relative au spectre d'émission d'éclairage (A), et le dispositif de commande (37) est conçu pour rapprocher le spectre d'émission corrigé (S1) du spectre d'émission d'éclairage (A).

14. Système de reproduction d'arrière-plan selon la revendication 13,
dans lequel l'entrée de signal (111) est connectée à un dispositif de mesure (115) pour mesurer le spectre d'émission d'éclairage (A) ;
ou l'entrée de signal (111) est connectée au dispositif d'éclairage (105) et le dispositif d'éclairage (105) est conçu pour transmettre à l'entrée de signal (111) l'information (I) relative au spectre d'émission d'éclairage (A).

15. Procédé de prise de vue d'un sujet réel (17) devant un arrière-plan virtuel dans un studio de prise de vue virtuel (13), comprenant les étapes consistant à :
- reproduire une représentation (19) de l'arrière-plan virtuel (21) sur un dispositif de reproduction d'arrière-plan (15) selon l'une des revendications 1 à 12 ;
- placer le sujet réel (17) devant le dispositif de reproduction d'arrière-plan (15) ; et
- prendre le sujet réel (17) devant la représentation (19) de l'arrière-plan virtuel (21) au moyen d'une caméra (23).
